(19) Europäisches Patentamt
European Patent Office
Office européen des brevets

(11) **EP 3 534 284 B1**

(12) **EUROPEAN PATENT SPECIFICATION**

(45) Date of publication and mention
of the grant of the patent:
**23.02.2022 Bulletin 2022/08**

(21) Application number: **19160410.7**

(22) Date of filing: **01.03.2019**

(51) International Patent Classification (IPC):
***G06F 21/56*** *(2013.01)*

(52) Cooperative Patent Classification (CPC):
**G06F 21/562**

(54) **CLASSIFICATION OF SOURCE DATA BY NEURAL NETWORK PROCESSING**

KLASSIFIZIERUNG VON QUELLDATEN DURCH VERARBEITUNG NEURONALER NETZWERKE

CLASSIFICATION DE DONNÉES SOURCE PAR TRAITEMENT DE RÉSEAU NEURONAL

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority: **01.03.2018 US 201815909372**

(43) Date of publication of application:
**04.09.2019 Bulletin 2019/36**

(73) Proprietor: **CrowdStrike, Inc.**
**Irvine CA 92618 (US)**

(72) Inventors:
• **ELKIND, David**
**Arlington, VA Virginia 22201 (US)**
• **CRENSHAW, Patrick**
**Atlanta, GA Georgia 30306 (US)**
• **KRASSER, Sven**
**Los Angeles, CA California 90065 (US)**

(74) Representative: **Murgitroyd & Company**
**Murgitroyd House**
**165-169 Scotland Street**
**Glasgow G5 8PL (GB)**

(56) References cited:
**EP-A1- 3 173 983          WO-A1-2016/168690
US-A1- 2016 379 112**

**Description**

**BACKGROUND**

With computer and Internet use forming an ever-greater part of day-to-day life, security exploits and cyber-attacks directed to stealing and destroying computer resources, data, and private information are becoming an increasing problem. For example, "malware," or malicious software, is a general term used to refer to a variety of forms of hostile or intrusive computer programs or code. Malware is used, for example, by cyber attackers to disrupt computer operations, to access and to steal sensitive information stored on the computer or provided to the computer by a user, or to perform other actions that are harmful to the computer and/or to the user of the computer. Malware may include computer viruses, worms, Trojan horses, ransomware, rootkits, keyloggers, spyware, adware, rogue security software, potentially unwanted programs (PUPs), potentially unwanted applications (PUAs), and other malicious programs. Malware may be formatted as executable files (e.g., COM or EXE files), dynamic link libraries (DLLs), scripts, steganographic encodings within media files such as images, portable document format (PDF), and/or other types of computer programs, or combinations thereof.

Malware authors or distributors frequently disguise or obfuscate malware in attempts to evade detection by malware-detection or -removal tools. Consequently, it is time consuming to determine if a program or code is malware and if so, to determine the harmful actions the malware performs without running the malware.

The safe and efficient operation of a computing device and the security and use of accessible data can depend on the identification or classification of code as malicious. A malicious code detector prevents the inadvertent and unknowing execution of malware or malicious code that could sabotage or otherwise control the operation and efficiency of a computer. For example, malicious code could gain personal information-including bank account information, health information, and browsing history-stored on a computer.

Malware detection methods typically present in one of two types. In one manifestation, signatures or characteristics of malware are collected and used to identify malware. This approach identifies malware that exhibits the signatures or characteristics that have been previously identified. This approach identifies known malware and may not identify newly created malware with previously unknown signatures, allowing that new malware to attack a computer. A malware detection approach based on known signatures should be constantly updated to detect new types of malicious code not previously identified. This detection approach provides the user with a false sense of security that the computing device is protected from malware, even when such malicious code may be executing on the computing device.

Another approach is to use artificial intelligence or machine learning approaches such as neural networks to attempt to identify malware. Many standard neural network approaches are limited in their effectiveness as they use an input layer having a fixed-length feature vectors of inputs thereby complicating analysis of a varying length input data. These approaches use a fixed set of properties of the malicious code, and typically require *a priori* knowledge of the properties of the malicious code and may not adequately detect malware having novel properties. Variable properties of malware that are encoded in a variable number of bits or information segments of computer code may escape detection from neural network approaches.

US 2016/379112 describes training and operation of computational models. A processing unit is described that can acquire datasets from respective data sources and determine values of a plurality of features based on the plurality of datasets. The processing unit can modify input-specific parameters or history parameters of a computational model based on the values of the features. The processing unit can determine an estimated value of a target feature based at least in part on the modified computational model and values of one or more reference features.

WO 2016/168690 describes recurrent neural networks for malware analysis. Using a recurrent neural network (RNN) that has been trained to a satisfactory level of performance, highly discriminative features can be extracted by running a sample through the RNN, and then extracting a final hidden state.

EP 3173983 describes a diagnostic system and method for providing recommendations concerning an industrial system. The diagnostic system comprises an extraction unit and a processing unit. The extraction unit adapted to recognize ontology instances of classes within a domain related ontology using a recurrent neural network trained with annotations of input data received from distributed data sources and adapted to derive relations between recognized ontology instances using a convolutional neural network and to generate triples each comprising a derived relation and the corresponding ontology instances. The processing unit adapted to retrieve at least one recommendation in response to an enquiry.

**BRIEF DESCRIPTION OF THE DRAWINGS**

The detailed description is set forth with reference to the accompanying figures. In the figures, the leftmost digit(s) of a reference number identifies the figure in which the reference number first appears. The use of the same reference numbers in different figures indicates similar or identical items or features.

FIG. 1 is a block diagram depicting example scenarios for operating neural network classification systems as described herein.

FIG. 2 is a block diagram depicting an example neural network system classification system.

FIG. 3A is an example approach to analyze portions of input data.

FIG. 3B is an example approach to analyze portions of input data.

FIG. 4A is an example of a recurrent neural network as used in the neural network system for classification of data as disclosed herein.

FIG. 4B illustrates an example operation over multiple time samples of a recurrent neural network as used in the neural network system for classification of data as disclosed herein.

FIG. 5 is an example of a multilayer perceptron as used in the neural network system for classification of data as disclosed herein.

FIG. 6 is a flow diagram of the operation the disclosed neural network system discussed in FIG. 2.

FIG. 7 is an example system of a command line embedder as disclosed herein.

FIG. 8 is an example system of a classifier system as disclosed herein.

FIG. 9 is an example system of a classifier system as disclosed herein.

FIG. 10 is an example system of a system for reconstructing the input source data as described herein.

FIG. 11 is an example system of a system for reconstructing the input source data as described herein.

FIG. 12 is an example system of a system for reconstructing the input source data as described herein.

## DETAILED DESCRIPTION

Accordingly there is provided a method as detailed in claim 1 and a system as detailed in claim 8. Advantageous features are provided in the dependent claims.

This disclosure describes a machine learning system for classifying variable length source data that may include known or unknown or novel malware. Any length of source data can be analyzed. In some examples, source data may comprise either executable or non-executable formats. In other examples, source data may comprise executable code. Executable code may comprise many types of forms, including machine language code, assembly code, object code, source code, libraries, or utilities. Alternatively, executable code may comprise code that is interpreted for execution such as interpretable code, bytecode, Java bytecode, JavaScript, Common Intermediate Language bytecode, Python scripts, CPython bytecode, Basic code, or other code from other scripting languages. In other examples, source data may comprise executables or executable files, including files in the aforementioned executable code format. Other source data may include command line data, a registry key, a registry key value, a file name, a domain name, a Uniform Resource Identifier, script code, a word processing file, a portable document format file, or a spreadsheet.

Furthermore, source data can include document files, PDF files, image files, images, or other non-executable formats. In other examples, source data may comprise one or more executables, executable files, executable code, executable formats, or non-executable formats.

In one example, variable length source data such as executable code is identified, and features of the identified executable code are extracted to create an arbitrary length sequence of features of the source data. Relationships between the features in the sequence of features may be analyzed for classification. The features may be generated by a neural network system, statistical extractors, filters, or other information extracting operations. This approach can classify executable code (or other types of source data, e.g., as discussed previously) of arbitrary length and may include or identify relationships between neighboring elements of the code (or source data). One example information extracting technique is Shannon entropy calculation. One example system includes a convolution filter, two recurrent neural network layers for analyzing variable length data, and a fully connected layer. The output of the fully connected layer may correspond to the classification of the source data.

In other examples, the convolution filter may be omitted or another convolution filter may be added to the system. In examples, the system may include one recurrent neural network layer, whereas in other examples, additional recurrent neural network layers beyond one may be added to the system. Furthermore, an optional convolutional neural network may be used in place of, or in addition to, the optional convolutional network.

In one example, the source data may be classified as containing malware or not. In another example, the source data may be classified as containing adware or not. In another example, the source data may be classified into multiple classes such as neither adware nor malware, adware, or malware. In another example, source data may be classified as not malware or an indication to which malware family from a set of known families it belongs.

The system allows representations of variable lengths of source data to be mapped to a set of values of a fixed dimensionality. In some examples, these values correspond to dense and non-sparse data, which is a more efficient representation for various machine learning algorithms. This type of representation reduces or removes noise and can improve the classification performance of some types of classifiers. In some examples, the dense value representation may be more memory efficient, for example when working with categorical data that otherwise would need to be represented in one-hot or n-hot sparse fashion. In other examples, the set of values may be of lower dimensionality than the input data. The disclosed systems may positively impact resource requirements for subsequent operations by allowing for more complex operations using existing system resources or in other examples by adding minimal system resources.

Source data can include one or more of the various types of executable, non-executable, source, command line code, or document formats. In one example, a neural network system classifies source data and identifies malicious executables before execution or display on a computing device. In another example, the source data can be classified as malicious code or normal code. In other examples, the source data can be classified as malicious executables or normal executables. In other examples, the source data can be classified as clean, dirty (or malicious), or adware. Classification need not be limited to malware, and can be applied to any type of code-executable code, source code, object code, libraries, operating system code, Java code, and command line code, for example. Furthermore, these techniques can apply to source data that is not executable computer code such as PDF documents, image files, images, or other document formats. Other source data may include bytecode, interpretable code, script code, a portable document format file, command line data, a registry key, a file name, a domain name, a Uniform Resource Identifier, script codc, a word processing file, or a spreadsheet. The source data typically is an ordered sequence of numerical values with an arbitrary length. The neural network classifying system can be deployed on any computing device that can access source data. Throughout this document, hexadecimal values area prefixed with "0x" and C-style backslash escapes are used for special characters within strings.

Relationships between the elements of the source data may be embedded within source data of arbitrary length. The disclosed systems and methods provide various examples of embeddings, including multiple embeddings. For example, "initial embeddings" describing relationships between source data elements may be initially generated. These "initial embeddings" may be further analyzed to create additional sets of embeddings describing relationships between source data elements. It is understood that the disclosed systems and methods can be applied to generate an arbitrary number of embeddings describing the relationships between the source data elements. These relationships may be used to classify the source data according to a criterion, such as malicious or not. The disclosed system analyzes the arbitrary length source data and embeds relevant features in a reduced feature space. This feature space may be analyzed to classify the source data according to chosen criteria.

Creating embeddings provides various advantages to the disclosed systems and methods. For example, embeddings can provide a fixed length representation of variable length input data. In some examples, fixed length representations fit into, and may be transmitted using a single network protocol data unit allowing for efficient transmission with deterministic bandwidth requirements. In other examples, embeddings provide a description of the input data that removes unnecessary information (similar to latitude and longitude being better representations for geographic locations than coordinates in x/y/z space), which improves the ability of classifiers to make predictions on the source data. In some examples, embeddings can support useful distance metrics between instances, for example to measure levels of similarity or to derive clusters of families of source data instances. In an example, embeddings allow using variable length data as input to specific machine learning algorithms such as gradient boosted trees or support vector machines. In some examples, the embeddings are the only input while in other examples the embeddings may be combined with other data, for example data represented as fixed vectors of floating point numbers.

In an example, the disclosed systems and networks embed latent features of varying length source data in a reduced dimension feature space. In one example, the latent features to be embedded are represented by Shannon Entropy calculations. The reduced dimension features of the varying length source data may be filtered using a convolution filter and applied to a neural network for classification. The neural network includes, in one example, one or more sequential recurrent neural network layers followed by one or more fully connected layers performing the classification of the source data.

The neural network classifying system may be deployed in various architectures. For example, the neural network classifying system can be deployed in a cloud-based system that is accessed by other computing devices. In this fashion, the cloud-based system can identify malicious executables (or other types of source data) before it is downloaded to a computing device or before it is executed by a computing device. Alternatively, or additionally, the neural network system may be deployed in an end-user computing device to identify malicious executables (or other types of source data) before execution by the processor. In other examples, the neural network classifying systems may be deployed in the cloud and detect files executing on computing devices. Computing devices can in addition, take action whenever a detection occurs. Actions can include reporting on the detection, alerting the user, quarantining the file, or terminating all or some of the processes associated with the file.

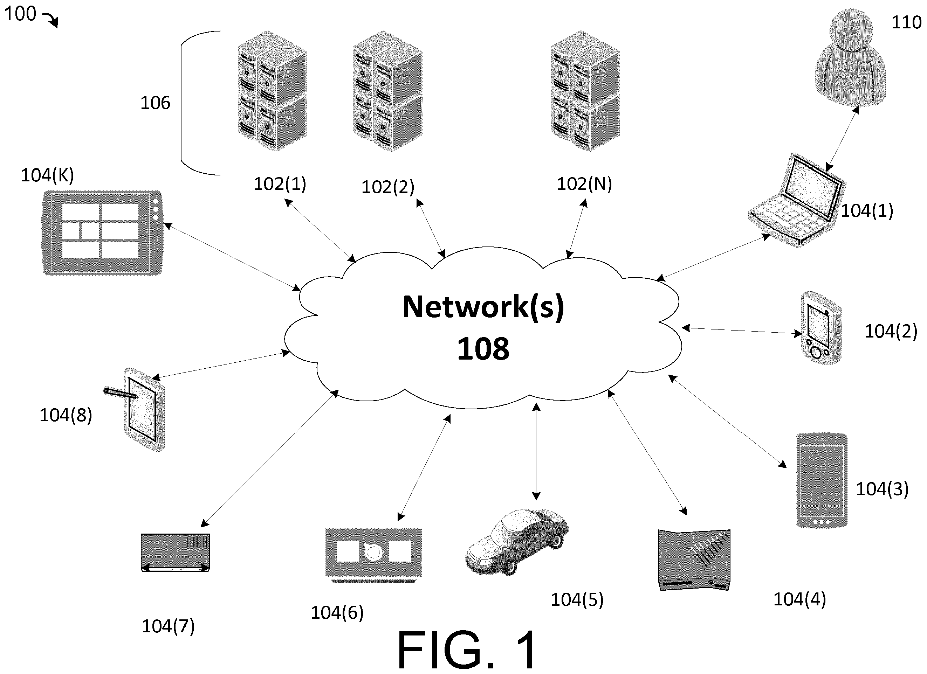

FIG. 1 shows an example scenario 100 in which examples of the neural network classifying system can operate and/or in which multinomial classification of source data and/or use methods such as those described can be performed. Illustrated devices and/or components of example scenario 100 can include computing devices 102(1)-102(N) (individually and/or collectively referred to herein with reference number 102), where N is any integer greater than and/or equal to 1, and computing devices 104(1)-104(K) (individually and/or collectively referred to herein with reference 104), where K is any integer greater than and/or equal to 0. No relationship need exist between $N$ and $K$.

Computing devices 102(1)-102(N) denote one or more computers in a cluster computing system deployed remotely, for example in the cloud or as physical or virtual appliances in a data center. Computing devices 102(1)-102(N) can be computing nodes in a cluster computing system 106, e.g., a cloud service such as GOOGLE CLOUD PLATFORM or another cluster computing system ("computing cluster" or "cluster") having several discrete computing nodes that work together to accomplish a computing task assigned to the cluster. In some examples, computing device(s) 104 can be clients of cluster 106 and can submit jobs to cluster 106 and/or receive job results from cluster 106. Computing devices 102(1)-102(N) in cluster 106 can, e.g., share resources, balance load, increase performance, and/or provide failover support and/or redundancy. One or more computing devices 104 can additionally or alternatively operate in a cluster and/or grouped configuration. In the illustrated example, one or more of computing devices 104(1)-104(K) may communicate with one or more of computing devices 102(1)-102(N). Additionally, or alternatively, one or more individual computing devices 104(1)-104(K) can communicate with cluster 106, e.g., with a load-balancing or job-coordination device of cluster 106, and cluster 106 or components thereof can route transmissions to individual computing devices 102.

Some cluster-based systems can have all or a portion of the cluster deployed in the cloud. Cloud computing allows for computing resources to be provided as services rather than a deliverable product. For example, in a cloud-computing environment, resources such as computing power, software, information, and/or network connectivity are provided (for example through a rental or lease agreement) over a network, such as the Internet. As used herein, the term "computing" used with reference to computing clusters, nodes, and jobs refers generally to computation, data manipulation, and/or other programmatically-controlled operations. The term "resource" used regarding clusters, nodes, and jobs refers generally to any commodity and/or service provided by the cluster for use by jobs. Resources can include processor cycles, disk space, random-access memory (RAM) space, network bandwidth (uplink, downlink, or both), prioritized network channels such as those used for communications with quality-of-service (QoS) guarantees, backup tape space and/or mounting/unmounting services, electrical power, etc. Cloud resources can be provided for internal use within an organization or for sale to outside customers. In some examples, computer security service providers can operate cluster 106, or can operate or subscribe to a cloud service providing computing resources. In other examples, cluster 106 is operated by the customers of a computer security provider, for example as physical or virtual appliances on their network.

In some examples, as indicated, computing device(s), e.g., computing devices 102(1) and 104(1) can intercommunicate to participate in and/or carry out source data classification and/or operation as described herein. For example, computing device 104(1) can be or include a data source owned or operated by or on behalf of a user, and computing device 102(1) can include the neural network classification system for classifying the source data as described below. Alternatively, the computing device 102(1) can include the source data for classification, and can classify the source data before execution or transmission of the source data. If the computing device 102(1) determines the source data to be malicious, for example, it may quarantine or otherwise prevent the offending code from being downloaded to or executed on the computing device 104(1) or from being executed on computing device 102(1).

Different devices and/or types of computing devices 102 and 104 can have different needs and/or ways of interacting with cluster 106. For example, one or more computing devices 104 can interact with cluster 106 with discrete request/response communications, e.g., for classifying the queries and responses using the disclosed network classification systems. Additionally, and/or alternatively, one or more computing devices 104 can be data sources and can interact with cluster 106 with discrete and/or ongoing transmission of data to be used as input to the neural network system for classification. For example, a data source in a personal computing device 104(1) can provide to cluster 106 data of newly-installed executable files, e.g., after installation and before execution of those files. Additionally, and or alternatively, one or more computing devices 104(1)-104(K) can be data sinks and can interact with cluster 106 with discrete and/or ongoing requests for data, e.g., updates to firewall or routing rules based on changing network communications or lists of hashes classified as malware by cluster 106.

In some examples, computing devices 102 and/or 104, e.g., laptop computing device 104(1), portable devices 104(2), smartphones 104(3), game consoles 104(4), network connected vehicles 104(5), set top boxes 104(6), media players 104(7), GPS devices 104(8), and/or computing devices 102 and/or 104 described herein, interact with an entity 110 (shown in phantom). The entity 110 can include systems, devices, parties such as users, and/or other features with which one or more computing devices 102 and/or 104 can interact. For brevity, examples of entity 110 are discussed herein with reference to users of a computing system; however, these examples are not limiting. In some examples, computing device 104 is operated by entity 110, e.g., a user. In some examples, one or more of computing devices 102 operate to train the neural network for transfer to other computing systems. In other examples, one or more of the computing devices 102(1)-102(N) may classify source data before transmitting that data to another computing device 104, e.g., a laptop or smartphone.

In various examples of the disclosed systems, determining whether files contain malware or malicious code, or other use cases, the classification system may include, and are not limited to, multilayer perceptrons (MLPs), neural networks (NNs), gradient-boosted NNs, deep neural networks (DNNs), recurrent neural networks (RNNs) such as long short-term memory (LSTM) networks or Gated Recurrent Unit (GRU) networks, decision trees such as Classification and regression Trees (CART), boosted tree ensembles such as those used by "xgboost" library, decision forests, autoencoders (e.g., denoising autoencoders such as stacked denoising autoencoders), Bayesian networks, support vector machines (SVMs), or hidden Markov models (HMMs). The classification system can additionally or alternatively include regression models, e.g., linear or nonlinear regression using mean squared deviation (MSD) or median absolute deviation (MAD) to determine fitting error during regression; linear least squares or ordinary least squares (OLS); fitting using generalized linear models (GLMs); hierarchical regression; Bayesian regression; nonparametric regression; or any supervised or unsupervised learning technique.

The neural network system may include parameters governing or affecting the output of the system in response to an input. Parameters may include, and are not limited to, e.g., per-neuron, per-input weight or bias values, activation-function selections, neuron weights, edge weights, tree-node weights or other data values. A training module may be configured to determine the parameter values of the neural network system.

In some examples, the parameters of the neural network can be determined based at least in part on "hyperparameters," values governing the training of the network. Example hyperparameters can include learning rate(s), momentum factor(s), minibatch size, maximum tree depth, regularization parameters, class weighting, or convergence criteria. In some examples, the neural network system can be trained using an interactive process involving updating and validation.

**Illustrative Examples**

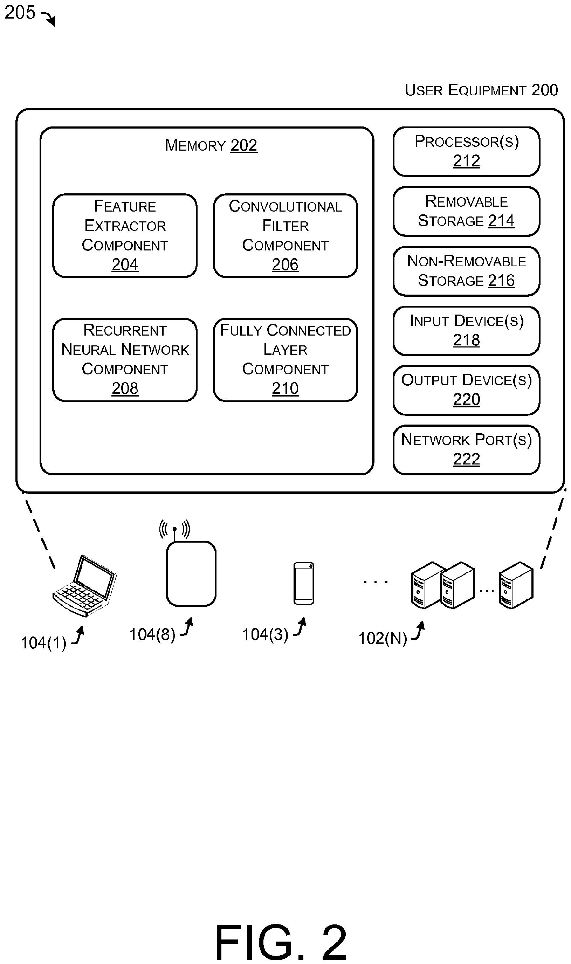

One example of a neural network system 205 configured to implement a method for classifying source data in user equipment 200 is shown in FIG. 2. In some embodiments, the user equipment 200 computing devices shown in FIG. 1, or can operate in conjunction with the user equipment 200 to facilitate the source data analysis, as discussed herein. For example, the user equipment 200 may be a server computer). It is to be understood in the context of this disclosure that the user equipment 200 can be implemented as a single device or as a plurality of devices with components and data distributed among them. By way of example, and without limitation, the user equipment 200 can be implemented as one or more smart phones, mobile phones, cell phones, tablet computers, portable computers, laptop computers, personal digital assistants (PDAs), electronic book devices, handheld gaming units, personal media player devices, wearable devices, or any other portable electronic devices that may access source data.

In one example, the user equipment 200 comprises a memory 202 storing a feature extractor component 204, convolutional filter component 206, machine learning components such as a recurrent neural network component 208, and a fully connected layer component 210. In an example, the convolutional filter component may be included as part of the feature extractor component 204. The user equipment 200 also includes processor(s) 212, a removable storage 214 and non-removable storage 216, input device(s) 218, output device(s) 220, and network port(s) 222.

In various embodiments, the memory 202 is volatile (such as RAM), non-volatile (such as ROM, flash memory, etc.) or some combination of the two. The feature extractor component 204, the convolutional filter component 206, the machine learning components such as recurrent neural network component 208, and fully connected layer component 210 stored in the memory 202 may comprise methods, threads, processes, applications or any other sort of executable instructions. Feature extractor component 204, the convolutional filter component 206 and the machine learning components such as recurrent neural network component (RNN component) 208 and fully connected layer component 210 can also include files and databases.

In some embodiments, the processor(s) 212 is a central processing unit (CPU), a graphics processing unit (GPU), or both CPU and GPU, or other processing unit or component known in the art.

The user equipment 200 also includes additional data storage devices (removable and/or non-removable) such as, for example, magnetic disks, optical disks, or tape. Such additional storage is illustrated in FIG. 2 by removable storage 214 and non-removable storage 216. Tangible computer-readable media can include volatile and nonvolatile, removable and non-removable media implemented in any method or technology for storage of information, such as computer readable instructions, data structures, program modules, or other data. Memory 202, removable storage 214 and non-removable storage 216 are examples of computer-readable storage media. Computer-readable storage media include, and are not limited to, RAM, ROM, EEPROM, flash memory or other memory technology, CD-ROM, digital versatile discs (DVD) or other optical storage, magnetic cassettes, magnetic tape, magnetic disk storage or other magnetic storage devices, or any other medium which can be used to store the desired information and which can be accessed by the user equipment 200. Any such tangible computer-readable media can be part of the user equipment 200.

The user equipment 200 can include input device(s) 218, such as a keypad, a cursor control, a touch-sensitive display, etc. Also, the user equipment 200 can include output device(s) 220, such as a display, speakers, etc. These devices are well known in the art and need not be discussed at length here.

As illustrated in FIG. 2, the user equipment 200 can include network port(s) 222 such as wired Ethernet adaptor and/or one or more wired or wireless transceiver. In some wireless embodiments, to increase throughput, the transceiver(s) in the network port(s) 222 can utilize multiple-input/multiple-output (MIMO) technology, 801.11ac, or other high bandwidth wireless protocols. The transceiver(s) in the network port(s) 222 can be any sort of wireless transceivers capable of engaging in wireless, radio frequency (RF) communication. The transceiver(s) in the network port(s) 222 can also include other wireless modems, such as a modem for engaging in Wi-Fi, WiMax, Bluetooth, or infrared communication.

The source data input to the system in this example may be executable code. The output of the system is a classification of the executable code, such as "acceptable," "malware," or "adware." The system includes a feature extractor component 204, an optional convolutional filter component 206 to identify relationships between the features extracted by feature extractor component 204, one or more recurrent neural network layers in a recurrent neural network component 208 to analyze the sequence of information generated by feature extractor component 204 or convolutional filter component 206 (if present), and a fully connected layer component 210 to classify the output of the recurrent neural network component 208. The convolutional filter component 206 need not be a separate component, and in some embodiments, the convolutional filter component 206 may be included as part of the feature extractor component 204.

The neural network system may be implemented on any computing system. Example computing systems includes those shown in FIG. 1, including cluster computer(s) 106 and computing devices 102 and 104. One or more computer components shown in FIG. 1 may be used in the examples.

The components of the neural network system 205, including the optional convolutional filter component 206, the one or more recurrent neural networks layers in the recurrent neural network component 208, and the fully connected layer component 210, may include weight parameters that may be optimized for more efficient network operation. After initialization, these parameters may be adjusted during a training phase so that the network can classify unknown computer code. In one example, the training phase can encompass applying training sets of source data having known classifications as input into the network. In an example, the statistical properties of the training data can correlate with the statistical properties of the source data to be tested. The output of the network is analyzed and compared to the known input source data during training in this example. The output of the network system is compared with the known input, and the difference between the predicted output and the known input are used to modify the weight parameters of the network system so that the neural network system more accurately classifies its input data.

Turning back to FIG. 2, the feature extractor component 204 can accept as input many types of source data. One such source data is executable files. Another type of source data can be executable code, which may comprise many types of forms, including machine language codc, assembly codc, object codc, source codc, libraries, or utilities. Alternatively, the executable code may comprise code that is interpreted for execution such as bytecode, Java bytecode, JavaScript, Common Intermediate Language bytecode, Python scripts, CPython bytecode, Basic code, or other code from other scripting languages. Other source data may include command line data, a registry key, a registry key value, a file name, a domain name, a Uniform Resource Identifier, script code, interpretable code, a word processing file, or a spreadsheet. Furthermore, source data can include document files, PDF files, image files, images, or other non-executable formats. The example neural network system 205 shown in FIG. 2 may be used to classify or analyze any type of source data.

The disclosed systems are not limited to analyzing computer code. In other examples, the disclosed systems can classify any arbitrary length sequence of data in which a relationship exists between neighboring elements in the sequence of data. The relationship is not limited to relationships between adjacent elements in a data sequence, and may extend to elements that are separated by one or more elements in the sequence. In some examples, the disclosed systems can analyze textual strings, symbols, and natural language expressions. In other examples, no specific relationship need exist between elements of the sequence of data.

Another example of code that may be classified by the disclosed system is a file in a Portable Executable Format (PDF), or a file having another format such as .DMG or .APP files. In other examples, code for mobile applications may be identified for classification. For example, an iOS archive .ipa file or an Android APK archive file may be classified using the neural network system 205 of FIG. 2. Alternatively, an XAP Windows Phone file or RIM .rim file format may be classified using the neural network system 205 of FIG. 2. In some examples, files to be classified are first processed, for example uncompressed.

The source data can be identified for classification or analyzed at various points in the system. For example, an executable can be classified as it is downloaded to the computing device. Alternatively, it can be classified at a time after the source data has been downloaded to the computing device. It may also be classified before it is downloaded to a computing device. It can also be classified immediately before it is executed by the computing device. It can be classified after uncompressing or extracting content, for example of the source data corresponds to an archive file format. In some examples, the file is classified after it is already executed.

In another example, the executable is analyzed by a kernel process at runtime before execution by the processor. In this example, the kernel process detects and prevents malicious code from being executed by the processor. This kernel-based approach can identify malicious code generated after the code has been downloaded to a processing device. This kernel-based approach provides for seamless detection of malicious code transparent to the user. In another example, the executing code is analyzed by a user mode process at runtime before executing by the processor, and a classification result is relayed to a kernel process that will prevent execution of code determined to be malicious.

The feature extractor component 204 receives as input source data and outputs a sequence of information related to the features within portions of the input executable code. Feature extractor component 204 may reduce the dimensionality of the input signal while maintaining the information content that is pertinent to subsequent classification. One way to reduce the dimensionality of the input signal is to compress the input signal, either in whole or in parts. In an example, the source data comprises executable code, and information content of non-overlapping, contiguous sections or "tiles" of the executable source data are determined to create a compressed sequence of information associated with the input signal. Because not all executable files have the same size, the lengths of these sequences may vary between files. As part of this step, the executable code may be analyzed in portions whose lengths may be variable. For example, executable code can be identified in fixed sized portions (or tile length), with the last tile being a function of the length of the executable code with respect to the tile length. The disclosed method analyzes executables of variable length.

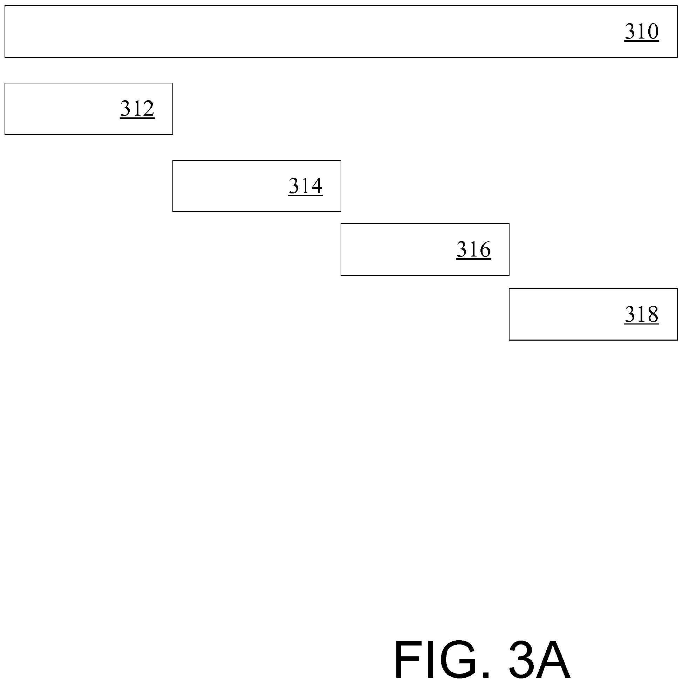

FIG. 3A shows one approach for identifying the non-overlapping tiles from a sequence of executable code 310 for feature extraction. In this figure, features may be extracted from non-overlapping tiles of contiguous sections of source data. In this case, the executable sequence 310 has length of 1000 bytes. Assuming the executable code is analyzed in 256 byte portions (e.g., the size and stride of the window is 256), namely bytes 0-255 (312), bytes 256-511 (314), bytes 512-767 (316), and bytes 768-999 (318). In the example of Fig. 3A, portions 312, 314, 316, and 318 are sequentially analyzed, and do not include overlapping content.

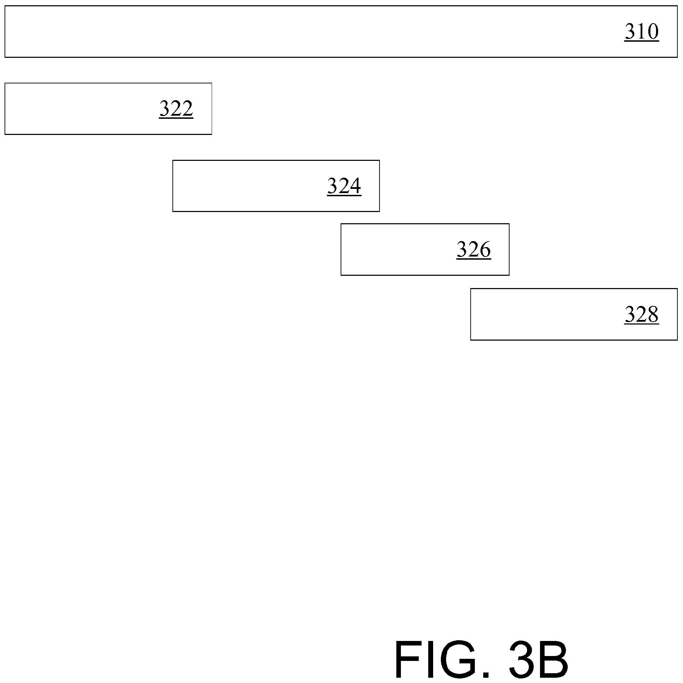

FIG. 3B illustrates another approach to identify tiles from a sequence of executable code 310. In this case, the tiles are analyzed, and features are extracted from contiguous section of source data, in a sequential, and partially overlapping fashion. FIG. 3B illustrates tiles having a 3-byte overlap. In this case, a 1000-byte executable code 310 is analyzed in 256 byte portions (e.g., the window size is 256 and the window stride is 253), namely bytes 0-255 (322), bytes 253-508 (324), bytes 506-761 (326), and bytes 769-999 (328). FIG. 3B shows sequential portions 322, 324, 326, and 328 having different sizes, yet some correlation to adjacent sections based on the common bytes in the overlapping sections. The overlapping portions may in some cases reduce the difference in randomness of neighboring tiles, and thus the difference in entropy of such tiles, and may allow the system to adequately function. The size and overlap of the tiles are additional parameters that may enhance the classification operation of the system.

The information content (or features) of each identified tile is determined to produce a compressed version of the tile to reduce the dimensionality of the source data (e.g., executable in this example). Each tile or portion of the executable may be replaced by an estimation of the features or information content. In one example, the Shannon Entropy of each tile is calculated to identify information content of the respective tile. The Shannon Entropy defines a relationship between values of a variable length tile. A group of features is embedded within each arbitrary number of values in each tile of the executable. The Shannon Entropy calculates features based on the expected value of the information in each tile. The Shannon Entropy H may be determined from the following equation:

$$ H = -\sum_{i=1}^{M} P_i \, log_2 P_i; $$

where $i$ is $i$-th possible value of a source symbol, $M$ is the number of unique source symbols, and $P_i$ is the probability of occurrence of $i$-th possible value of a source symbol in the tile. This example uses a logarithm with base 2, and any other logarithm base can be used, as this is just a scalar multiple of the $log_2$ quantity. Calculating the Shannon entropy function for each tile of the executable generates a sequence of information content of the identified computer executable having reduced dimensionality. The dimensionality of the input executable is reduced by the approximate length of each tile, as the Shannon entropy replaces a tile having length N with a single-number summary. For example, FIG. 2 illustrates a length 256 tiling approach to transform the input executable of 1000 bytes to a sequence having 4 values of information, one value for each identified tile. This four-length sequence is an example of a variable-length sequence processed by the system.

The Shannon entropy measures the amount of randomness in each tile. For example, a string of English text characters is relatively predictable (e.g., English words) and thus has low entropy. An encrypted text string may have high entropy. Analyzing the sequence of Shannon entropy calculations throughout the file or bit stream is an indication of the distribution of the amount of randomness in the bit stream or file. The Shannon entropy can summarize the data in a tile and reduce the complexity of the classification system.

In other examples, the entropy may be calculated using a logarithm having base other than 2. For example, the entropy can be calculated using the natural logarithm (base e, where e is Euler's constant), using a base 10, or any other base. The examples are not limited to a fixed base, and any base can be utilized.

In another example, the Shannon entropy dimensionality may be increased beyond one (e.g., a scalar expected value) to include, for example, an N dimension multi-dimensional entropy estimator. Multi-dimensional estimators may be applicable for certain applications. For example, a multi-dimensional entropy estimator may estimate the information content of an executable having multiple or higher order repetitive sequences. In other applications, the information content of entropy tiles having other statistical properties may be estimated using multi-dimensional estimators. In another example, the Shannon entropy is computed based on n-gram values, rather than byte values. In other examples, the Shannon entropy is computed based on byte values and n-gram values. In another example, entropy of a tile is computed over chunks of n bits of source data.

In other examples, other statistical methods may be used to estimate the information content of the tiles. Example statistical methods include Bayesian estimators, maximum likelihood estimators, method of moments estimators, Cramer-Rao Bound, minimum mean squared error, maximum a posteriori, minimum variance unbiased estimator, non-linear system identification, best linear unbiased estimator, unbiased estimators, particle filter, Markov chain Monte Carlo, Kalman filter, Wiener filter, and other derivatives, among others.

In other examples, the information content may be estimated by analyzing the compressibility of the data in the tiles of the source data. For example, for each tile $i$ of length $N_i$ a compressor returns a sequence of length $M_i$. The sequence of the values for $N_i/M_i$ (the compressibility for each tile) is then the output. Compressors can be based on various compression algorithms such as DEFLATE, Gzip, Lempel-Ziv-Oberhumer, LZ77, LZ78, bzip2, or Huffman coding.

In other examples, the information content (or features) of the tiles may be estimated in the frequency domain, rather than in the executable code domain. For example, a frequency transformation such as a Discrete Fourier Transform or Wavelet Transform can be applied to each tile, portions thereof, or the entire executable code, to transform the executable code to the frequency domain. Frequency transformations may be applied to any source data, including executables having periodic or aperiodic content, and used as input to the feature extractor. In some examples, after applying such a transform, coefficients corresponding to a subset of basis vectors are used as input to the feature extractor. In other examples, the subset of vectors may be further processed before input to the feature extractor. In other examples, the sequence of entropies or the sequence of compressibilities is transformed into the frequency domain instead of the raw source data.

In some examples, each of the aforementioned methods for estimating information content may be used to extract information from the source data. Similarly, each of these aforementioned methods may be used to generate a sequence of extracted information from the source data for use in various examples. Furthermore, in some examples, the output of these feature extractors may be applied to additional filters. In general, sequences of data located or identified within the system may be identified as intermediate sequences. Intermediate sequences are intended to have their broadest scope and may represent any sequence of information in the system or method. The input of the system and the output of the system may also be identified as intermediate sequences in some examples.

In an example, a convolution filter may receive as input the sequence of extracted information from one or more feature extractors and to further process the sequence of extracted information. In one example, the sequence of extracted information that is provided as input to the optional convolution filter may be referred to as an intermediate sequence, and the output of the convolution filter may be referred to as a sequence of extracted information. The filters or feature extractors may be combined or arranged in any order. The term feature extractor is to be construed broadly is intended to include, not exclude filters, statistical analyzers, and other data processing devices or modules.

The output of the feature extractor component 204 in FIG. 2 may be applied to optional convolution filter 230. In one example, convolutional filter component 206 may include a linear operator applied over a moving window. One example of a convolutional filter is a moving average. Convolutional filters generalize this idea to arbitrary linear combinations of adjacent values which may be learned directly from the data rather than being specified a priori by the researcher. In one example, convolutional filter component 206 attempts to enhance the signal-to-noise ratio of the input sequence to facilitate more accurate classification of the executable code. Convolutional filter component 206 may aid in identifying and amplifying the key features of the executable code, as well as reducing the noise of the information in the executable code.

Convolutional filter component 206 can be described by a convolution function. One example convolution function is function {0, 0, 1, 1, 1, 0, 0, 0}. The application of this function to the sequence of Shannon Entropy tiles from feature extractor component 204 causes the entropy of one tile to affect three successive values of the resulting convolution. In this fashion, a convolution filter can identify or enhance relationships between successive items of a sequence. Alternatively, another initial convolution function may be {0, 0, 1, 0.5, 0.25, 0}, which reduces the effect of the Shannon Entropy of one tile on the three successive convolution values. In another example, the convolution function is initially populated as random values within the range [-1, 1], and the weights of the convolution function may be adjusted during training of the network to yield a convolution function that more adequately enhances the signal to noise ratio of the sequence of Shannon Entropy Tiles. Both the length and the weights of the convolution function may be altered to enhance the signal to noise ratio.

In other examples, the length of the convolution function may vary. The length of the convolution function can be fixed before training, or alternatively, can be adjusted during training. The convolution function may vary depending on the amount of overlap between tiles. For example, a convolution function having more terms blends information from one tile to successive tiles, depending on its weighting function.

A convolutional filter $F$ is an n-tensor matching the dimensionality of the input data. For example, a grayscale photograph has two dimensions (height, width), so common convolutional filters for grayscale photographs are matrices (2-tensors), while for a vector of inputs such as a sequence of entropy tile values would apply a vector as a convolutional filter (1-tensor). Convolution filter $F$ with length $L$ is applied by computing the convolution function on L consecutive sequence values. If the convolution filter "sticks out" at the margins of the sequence, the sequence may be padded with some values (0 in some examples, and in examples, any values may be chosen) to match the length of the filter. In this case, the resulting sequence has the same length as the input sequence (this is commonly referred to as "SAME" padding because the length of the sequence output is the length of the sequence input). At the first convolution, the last element of the convolutional filter is applied to the first element of the sequence and the penultimate element of the convolutional filter, and all preceding $L - 2$ elements are applied to the padded values. Alternatively, the filter may not be permitted to stick out from the sequence, and no padding is applied. In this case, the length of the output sequence is shorter, reduced in length by $L$ (this is commonly referred to as "VALID" padding, because the filter is applied to unadulterated data, i.e. data that has not been padded at the margins). After computing the convolution function on the first $L$ (possibly padded) tiles, the filter is advanced by a stride $S$; if the first tile of the sequence that the filter covers has index 0 when computing the first convolution operation, then the first tile covered by the convolutional filter for the second convolution operation has index $S$, and the first tile of the third convolution has index $2S$. The filter is computed and advanced in this manner until the filter reaches the end of the sequence. In an example, many filters $F$ may be estimated for a single model, and each filter may learn a piece of information about the sequence which may be useful in subsequent steps.

In other examples, one or more additional convolution filters may be included in the system. The inclusion of additional convolution filters may generate additional intermediate sequences. The additional intermediate sequences may be used or further processed in some examples.

In other examples, a convolution filter $F$ may be applied to the voxels of a color photograph. In this case, the voxels are represented by a matrix for each component of a photograph's color model (RGB, HSV, HSL, CIE XYZ, CIELUV, L*a*b*, YIQ, for example), so a convolutional filter may be a 2-tensor sequentially applied over the color space or a 3-tensor, depending on the application.

In one example, user equipment 200 includes a recurrent neural network component 208 that includes one or more recurrent neural network (RNN) layers. An RNN layer is a neural network layer whose output is a function of current inputs and previous outputs; in this sense, an RNN layer has a "memory" about the data that it has already processed. An RNN layer includes a feedback state to evaluate sequences using both current and past information. The output of the RNN layer is calculated by combining a weighted application of the current input with a weighted application of past outputs. In some examples, a softmax or other nonlinear function may be applied at one or more layers of the network. The output of an RNN layer may also be identified as an intermediate sequence.

An RNN can analyze variable length input data; the input to an RNN layer is not limited to a fixed size input. For example, analyzing a portable executable file that has been processed into a vector of length L (e.g., after using the Shannon Entropy calculation), with K convolution filters yields K vectors, each of length L. The output of the convolution filter(s) is input into an RNN layer having K RNN "cells," and in this example, each RNN cell receives a single vector of Length L as input. In other examples, L may vary among different source data input, and the K RNN cells do not. In other examples, in which a convolution filter is omitted, the vector of length L may be input into each of the K RNN cells, with each cell receiving a vector as input. Because an RNN can repetitively analyze discrete samples (or tokens) of data, an RNN can analyze variable-length entropy tile data. Each input vector is sequentially inputted into an RNN, allowing the RNN to repeatedly analyze sequences of varying lengths.

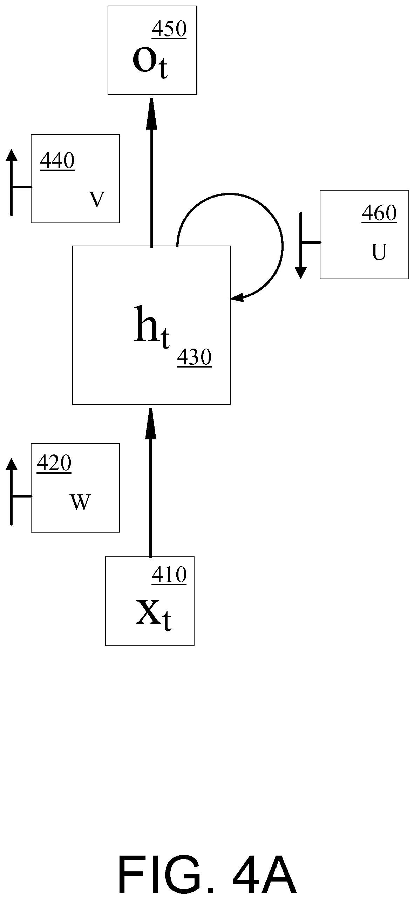

An example RNN layer is shown in FIG. 4A. The RNN shown in FIG. 4A analyzes a value at time (sample or token) t. In the case of source data being vectorized, by, e.g., a Shannon Entropy calculation, the vector samples can be directly processed by the system. In the case of tokenized inputs (e.g., natural language or command line input), the tokens are first vectorized by a mapping function. One such mapping function is a lookup table mapping a token to a vectorized input.

To apply sequential data (e.g., sequential in time or position) to the RNN, the next input data is applied to the RNN. The RNN performs the same operations on this new data to produce updated output. This process is continued until all input data to be analyzed has been applied to the RNN. In the example illustrated in FIG. 4A, at time (or sample or sequence value) t, input $xt$ (410) is applied to weight matrix $W$ (420) to produce state $h_t$ (430). Output $O_t$ (450) is generated by multiplying state $h_t$ (430) by weight matrix $V$ (440). In some examples a softmax or other nonlinear function such as an exponential linear unit or rectified linear unit may be applied to the state $h_t$ (430) or output $O_t$ (450$_t$). At the next sample, state $h_t$ (430) is also applied to a weight matrix $U$ (460) and fed back to the RNN to determine state $h_{t+1}$ in response to input $x_{t+1}$. The RNN may also include one or more hidden layers, each including a weight matrix to apply to input $x_t$ and feedback loops.

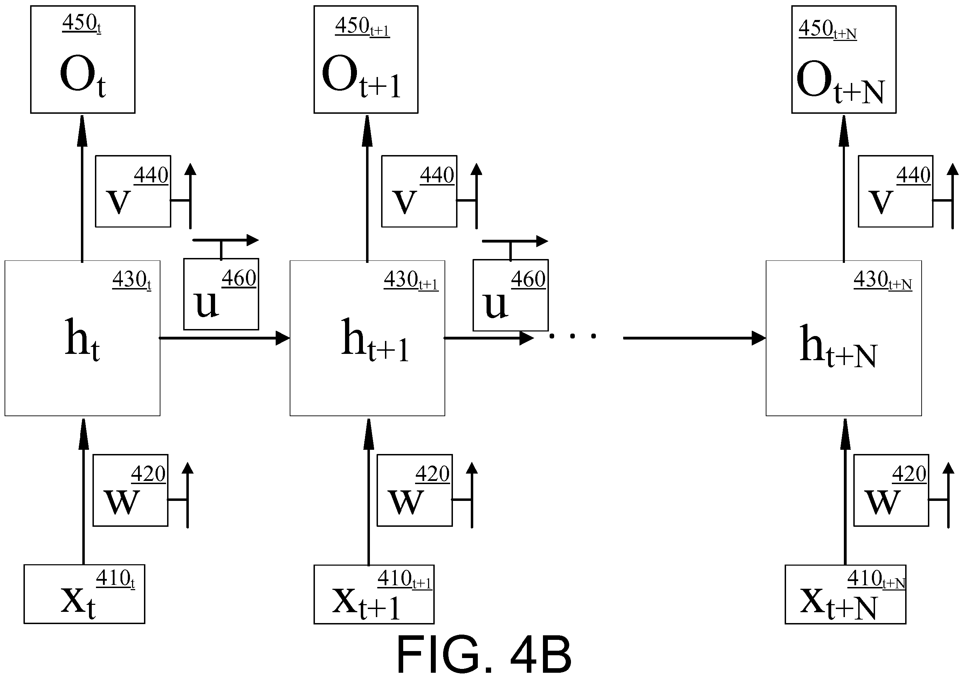

Fig. 4B illustrates one example of applying sequential data to an RNN. The leftmost part of the Fig. 4B (450) shows the operation of the RNN at sample $xt$ is the input at time $t$ and $O_t$ (450t) is the output at time t. The middle part of Fig. 4B (450t+i) shows the operation of the RNN at the next sample $x_{t+1}$. Finally, the rightmost part of Fig. 4B ($450_{t+N}$) shows the operation of the RNN at the final sample $x_{t+N}$. Here, $x_t$ (410t), $x_{t+1}$ (410t+i), and $x_{t+N}$ ($410_{t+N}$) are the input samples at times $t$, $t+1$, and $t+N$, respectively, and $O_t$ ($450_t$), $O_{t+1}$ (450t+i), and $O_{t+N}$ ($450_{t+N}$) are the inputs at times $t$, $t+1$, and $t+N$, respectively. $W$ (420) is the weight vector applied to the input, $V$ (440) is the weight vector applied to the output, and $U$ (460) is the weight matrix applied to the state $h$. The state $h$ is modified over time by applying the weight matrix $U$ (460) to the state $h_t$ at time t to produce the next state value $h_{t+1}$ (430t+i) at time $t+1$. In other examples, a softmax or other nonlinear function such as an exponential linear unit or rectified linear unit may be applied to the state $h_t$ (430) or output $O_t$(450t).

The input sample can represent a time-based sequence, where each sample corresponds to a sample at a discrete point in time. In some examples, samples are vectors derived from strings which are mapped to vectors of numerical values. In one example, this mapping from string tokens to vectors of numerical values can be learned during training of the RNN. In an example, the mapping from string tokens to vectors of numerical values may not be learned during training. In an example, the mappings from string tokens to vectors of numerical values need not be learned during training. In some examples, the mapping is learned separately from training the RNN using a separate training process. In other examples, the sample can represent a character in a sequence of characters (e.g., a token) which may be mapped to vectors of numerical values. This mapping from a sequence of characters to tokens to vectors of numerical values can be learned during training of the RNN or not, and may be learned or not. In some examples, the mapping is learned separately from training the RNN using a separate training process. Any sequential data can be applied to an RNN, whether the data is sequential in the time or spatial domain or merely related as a sequence generated by some process that has received some input data, such as bytes from a file generated by a process that emits bytes from that file in some sequence in any order.

In one example, the RNN is a Gated Recurrent Unit (GRU). Alternatively, the RNN may be a Long Short Term Memory (LSTM) network. Other types of RNNs may also be used, including Bidirectional RNNs, Deep (Bidirectional) RNNs, among others. RNNs allow for the sequential analysis of varying lengths (or multiple samples) of data such as executable code. The RNNs used in the examples are not limited to a fixed set of parameters or signatures for the malicious code, and allow for the analysis of any variable length source data. These examples can capture properties of unknown malicious code or files without knowing specific features of the malware. Other examples can classify malicious code or files with knowing specific features of the malware. The disclosed systems and methods may also be used when one or more specific features of the malware are known.

In other examples, the recurrent neural network component 208 may include more than one layer. For a two RNN layer example, the output of the first RNN layer may be used as input to a second RNN layer of RNN component 208. A second RNN layer may be advantageous as the code evaluated becomes more complex because the additional RNN layer may identify more complex aspects of the characteristics of the input. Additional RNN layers may be included in RNN component 208.

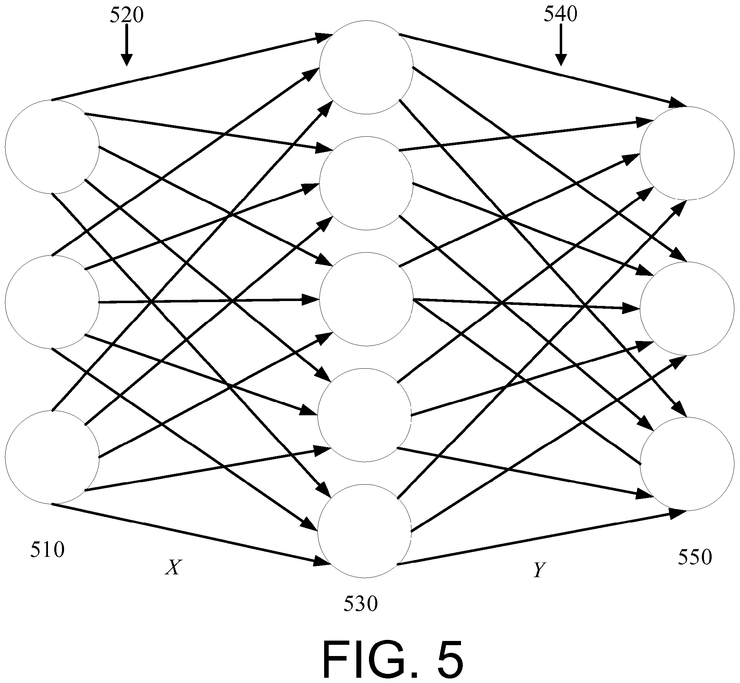

The user equipment 200 also includes a fully connected layer component 210 that includes one or more fully connected layers. An example of two fully connected layers with one layer being a hidden layer is shown in FIG. 5. In this case, each input node in input layer 510 is connected to each hidden node in hidden node layer 530 via weight matrix $X$ (520), and each hidden node in hidden node layer 530 is connected to each output node in output layer 550 via weight matrix $Y$ (540). In operation, the input to the two fully connected layers is multiplied by weight matrix $X$ (520) to yield input values for each hidden node, then an activation function is applied at each node yielding a vector of output values (the output of the first hidden layer). Then the vector of output values of the first hidden layer is multiplied by weight matrix $Y$ (540) to yield the input values for the nodes of output layer 550. In some examples, an activation function is then applied at each node in output layer 550 to yield the output values. In other examples, additionally or alternatively, a softmax function may be applied at any layer. Additionally, any values may be increased or decreased by a constant value (so-called "bias" terms).

The fully connected layers need not be limited to network having a single layer of hidden nodes. In other examples, there may be one fully connected layer and no hidden node layer. Alternatively, the fully connected layers may include two or more hidden layers, depending on the complexity of the source data to be analyzed, as well as the acceptable error tolerance and computational costs. Each hidden layer may include a weight matrix that is applied to the input to nodes in the hidden layer and an associated activation function, which can differ between layers. A softmax or other nonlinear functions such as exponential units or rectified linear units may be applied to the hidden or output layers of any additional fully connected layer.

In other examples, one or more partially connected layer, may be used in addition to, or in lieu of a fully connected layer. A partially connected layer may be used in some implementations to, for example, enhance the training efficiency of the network. To create a partially connected layer, one or more of the nodes is not connected to each node in the successive layer. For example, one or more of the input nodes may not be connected to each node of the successive layer. Alternatively, or additionally, one or more of the hidden nodes may not be connected to each node of the successive layer. A partially connected layer may be created by setting one or more of the elements of weight matrices $X$ or $Y$ to 0 or by using a sparse matrix multiply in which a weight matrix does not contain values for some connections between some nodes. In some examples, a softmax or other nonlinear functions such as exponential units or rectified linear units may be applied to the hidden or output layers of the partially connected layer. Those skilled in the art will recognize other approaches to create a partially connected layer.

The output of one or more fully connected layers of fully connected layer component, and thus the output of the neural network, can classify the input code. In some examples, a softmax or other nonlinear functions such as exponential units or rectified linear units may be applied to the output layer of a fully connected layer. For example, the code can be classified as "malicious" or "OK" with an associated confidence based on the softmax output. In other examples, the classifier is not limited to a binary classifier, and can be a multinomial classifier. For example, the source data such as executable code to be tested may be classified as "clean," "dirty," or "adware." Any other classifications may be associated with the outputs of the network. This network can also be used for many other types of classification based on the source data to be analyzed.

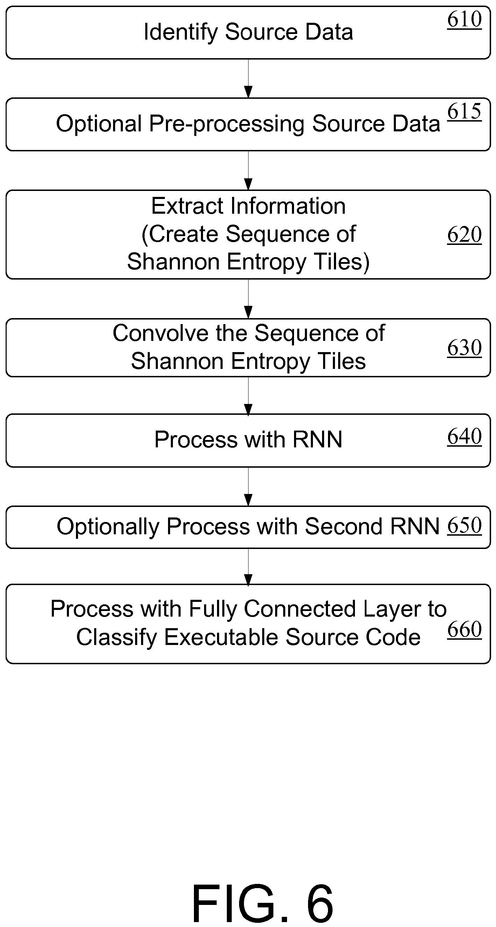

One example operation of user equipment 200 is described in FIG. 6. In this case, source data is selected at block 610. The source data may be optionally preprocessed (block 615); for example, the source data may be decompressed before being processed. Other examples of pre-processing may include one or more frequency transformations of the source data as discussed previously. Features of the identified source data are identified or extracted from the executable code in block 620. In one example, the Shannon Entropy of non-overlapping and contiguous portions of the identified executable code is calculated to create a sequence of extracted features from the executable source data. In one example, the length of the sequence of extracted features based in part, on the length of the source data executable. The sequence generated from the Shannon Entropy calculations is a compressed version of the executable code having a reduced dimension or size. The variable length sequence of extracted features is applied to a convolution filter in block 630. The convolution filter enhances the signal to noise ratio of the sequence of Shannon Entropy calculations. In one example, the output of the convolution filter identifies (or embeds) relationships between neighboring elements of the sequence of extracted features. The output of the convolution filter is input to a RNN to analyze the variable length sequence in block 640. Optionally, the output of the RNN is applied to a second RNN in block 650 to further enhance the output of the system. Finally, the output of the RNN is applied to a fully connected layer in block 660 to classify the executable sequence according to particular criteria.

A neural network may be trained before it can be used as a classifier. To do so, in one example, the weights for each layer in the network are set to an initial value. In one example, the weights in each layer of the network are initialized to random values. Training may determine the convolution function and the weights in the RNN (or convolutional neural network if present) and fully connected layers. The network may be trained via supervised learning, unsupervised learning, or a combination of the two. For supervised learning, a collection of source data (e.g., executable code) having known classifications are applied as input to the network system. Example classifications may include "clean," "dirty," or "adware." The output of the network is compared to the known classification of each sequence. Example training algorithms for the neural network system include backpropagation through time (BPTT), real-time recurrent learning (RTRL), and extended Kalman filtering based techniques (EKF). Each of these approaches modifies the weight values of the network components to reduce the error between the calculated output of the network with the expected output of the network in response to each known input vector of the training set. As the training progresses, the error associated with the output of the network may reduce on average. The training phase may continue until an error tolerance is rcachcd.

The training algorithm adjusts the weights of each layer so that the system error generated with the training data is minimized or falls within an acceptable range. The weights of the optional convolution filter layer (or optional convolutional neural network), the one or more RNN layers, and the fully connected layer may each be adjusted during the training phase, if necessary so that the system accurately (or appropriately) classifies the input data.

In one example, the training samples comprise a corpus of at least 10,000 labeled sample files. A first random sample of the training corpus can be applied to the neural network system during training. Model estimates may be compared to the labeled disposition of the source data, for example in a binary scheme with one label corresponding to non-malware files and another to malware files. An error reducing algorithm for a supervised training process may be used to adjust the system parameters. Thereafter, the first random sample from the training corpus is removed, and the process repeated until all samples have been applied to the network. This entire training process can be repetitively performed until the training algorithm meets a threshold for fitness. Additionally, fitness metrics may be computed against a disjoint portion of samples comprising a validation set to provide further evidence that the model is suitable.

Additionally, the number of nodes in the network layers may be adjusted during training to enhance training or prediction of the network. For example, the length of the convolution filter may be adjusted to enhance the accuracy of the network classification. By changing the convolution filter length, the signal to noise ratio of the input to the RNN may be increased, thereby enhancing the efficiency of the overall network. Alternatively, the number of hidden nodes in the RNN or fully connected layer may be adjusted to enhance the results. In other examples, the number of RNNs over time during training may be modified to enhance the training efficiency.

A model may also be trained in an unsupervised fashion, meaning that class labels for the software (e.g. "clean" or "malware") are not incorporated in the model estimation procedure. The unsupervised approach may be divided into two general strategies, generative and discriminative. The generative strategy attempts to learn a fixed-length representation of the variable-length data which may be used to *reconstruct* the full, variable-length sequence. The model is composed of two parts. The first part learns a fixed-length representation. This representation may be the same length no matter the length of the input sequences, and its size may not necessarily be smaller than that of the original sequence. The second part takes the fixed-length representation as an input and uses that data (and learned parameters) to reconstruct the original scqucncc. In an example, fitness of the model is evaluated by any number of metrics such as mean absolute deviation, least squares, or other methods. The networks for reconstructing the original signal (such as the output of a feature extractor) is discarded after training, and in production use the fixed length representation of the encoder network is used as the output. The discriminative strategy might also be termed semi-supervised. In one example, the model is trained using a supervised objective function, and the class labels (dirty, adware, neither dirty nor adware) may be unknown. Class labels may be generated by generating data at random and assigning that data to one class. The data derived from real sources (e.g. real software) is assigned to the opposite class. In one example, training the model proceeds as per the supervised process.

In another example using unsupervised learning, the training samples comprise a corpus of at least 10,000 unlabeled sample files. A first random sample of the training corpus can be applied to the neural network system during training. Thereafter, the first random sample from the training corpus is removed, and the process repeated until all samples have been applied to the network. This entire training process can be repetitively performed until the training algorithm meets a threshold for fitness. Additionally, fitness metrics may be computed against a disjoint portion of samples comprising a validation set to provide further evidence that the model is suitable.

The disclosed network may be trained on any processing device. In one example, the network may be trained using a computer deployed remotely such as in the cloud. In this case, after the network is trained, the network with the appropriate weights is downloaded and deployed on a computing device for classifying source data. Alternatively, the network may be deployed and trained on a computing device. For example, a training data set may be transferred to a computing device and used to train the neural network deployed on the computing device.

The disclosed network may be deployed on any computer system that accesses computer data. In one example, the trained network is deployed on a local computing device such as a desktop computer, a laptop computer, a handheld device, a tablet computer, a smartphone, a game controller, or any internet-connected device. In this case, source data is transferred to or located in a computing device may be analyzed for classification.

In another example, the source data classification network may be deployed in a network-based cloud system. In this case, source data such as executable code is classified to prevent malicious source data from being downloaded to a computing device. For example, a mail server deployed remotely in the cloud can classify files to be downloaded as malicious and bar such files from being downloaded to the mail clicnt.

The disclosed network has many advantageous features. For example, it combines a convolutional filter (or convolutional neural network) with one or more recurrent neural network layers. The disclosed systems may be applied to a variable length sequence of data in which relationships exist between neighboring elements of the sequence. The network may perform multinomial classifications of source data having variable lengths. Furthermore, the network may be used to generate lower-dimensional embeddings that can be leveraged alongside other features by a separate classifier, enhancing the overall performance of the separate classifier. In some examples, the embeddings are not lower dimensional than the input data and are created to derive a fixed-dimensional representation for input data of varying dimensionality such as sequences of different lengths. Additionally, the network may be applied to source data directed toward computer security applications, thereby enhancing the operation, use, and efficiency of a computing device.

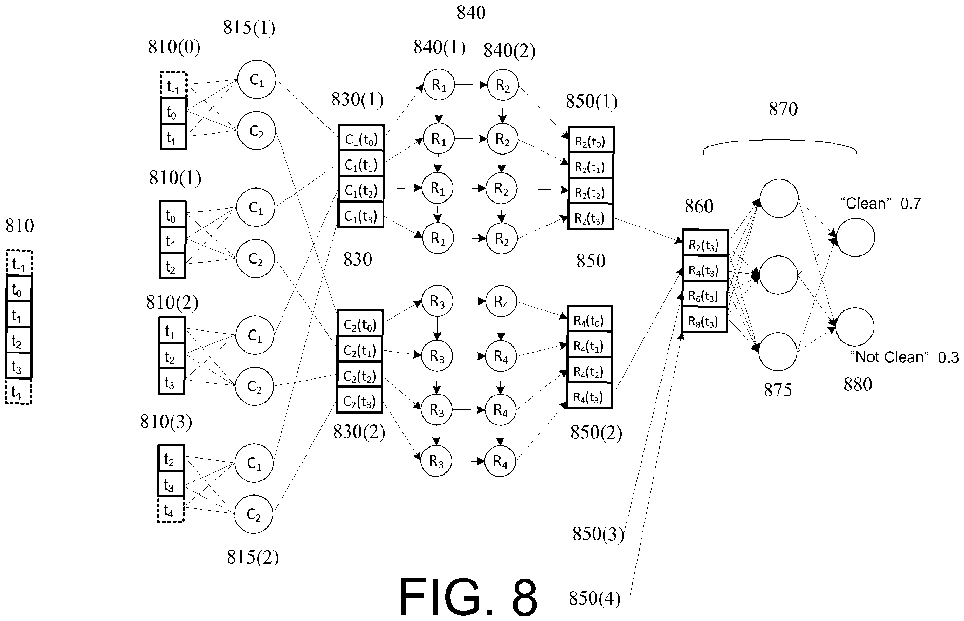

FIG. 8 illustrates another example system for classifying source data. Each box in FIG. 8 denotes an input or output, each circle (or node) denotes a computational step, and each arrow denotes a connection with a node. This system shown in FIG. 8 includes two optional convolutional filters (815(1) and 815(2)), two recurrent neural network layers (840(1) and 840(2)), and a fully connected layer 870. In other examples, the system may include additional or fewer convolutional filters, including completely lacking all convolution filters, or multiple layers of convolutional filters optionally connected by fully connected layers. In other examples, the system may include additional or fewer recurrent neural network layers. In other examples, the system may include additional fully connected layers in between any other layers.

An input sequence 810 is provided as input to the system. The input sequence may have a variable length $n$, and the samples of the input sequence are denoted as $t_i$, where $0 \leq i \leq n\text{-}1$. The input sequence may be generated by any of the methods discussed previously to extract information or features from source data. One example input sequence is an input sequence generated from a Shannon Entropy calculation for each input tile of source data. A tile of source data may be generated applying a window function to the source data. In one example, the source data window has a size and a stride each equal to $L$. In one example, the size of the window defines the number of samples that are input to the Shannon Entropy calculation (or other statistical operation such as a Wavelet transform, a Fourier Transform). A source data window having equal size and stride values creates tiles in which the underlying source data operated on to create the input sequence do not overlap. In some examples, the size and stride of the source data window arc the same, whereas in other examples, the size and stride of the source data window differ.

The input sequence in the example shown in FIG. 8 may be a tuple of entropy tiles and a class label for use in a supervised learning approach, e.g., the input would be a tuple of (entropy tiles, class label). In the example shown in FIG. 8, the input sequence has a length 4, and its four samples are $t_0$, $t_1$, $t_2$, and $t_3$.

The input sequence may optionally be applied as inputs to one or more convolution filters 820(1) and 820(2). In some examples, each convolution filter targets one or more types of information content in the input samples. Each convolution filter (820(1) and 820(2)) shown in the example of FIG. 8 has the same length (or size), receives the same input sequence, and produces a sequence having the same length as the input sequence. Each convolution filter shown in FIG. 8 has a size of 3, as each requires three input samples, and a stride length of 1. At sample to, convolution filters 820(1) and 820(2) receive input sample 810(0) (which includes $(t_{-1}, t_0, t_1)$) as input and produce $C_1(t_0)$ and $C_2(t_0)$, respectively, as output. This process is continued for the remaining samples, $t_1$ through $t_{N\text{-}1}$, where N=4 to generate $C_1(t_1)$, $C_2(t_1)$, $C_1(t_2)$, $C_2(t_2)$, and $C_1(t_3)$, $C_2(t_3)$. Convolution filters may repetitively receive the remaining input samples 810(1)) (samples to, $t_1$, $t_2$), 810(2) (samples $t_1$, $t_2$, $t_3$), and 810(3) (samples $t_2$, $t_3$, $t_4$) and produce the remaining output of convolution filter 830(1) (Ci(ti), $C_1(t_2)$, and $C_1(t_3)$) and 830(2) ($C_2(t_1)$, $C_2(t_2)$, and $C_2(t_3)$).

When using a convolution filter that operates on input samples that are outside the range of the input sequence-in this case, the first sample (e.g., $t_{-1}$) and the last sample (e.g., $t_n$)-those out of range samples may be created or initialized. The out-of-range samples may be created by a padding process. One example padding process is to set the values of the out-of-range samples to 0. In other examples, the out-of-range samples may be set to values other than zero such as assigning random values or by applying an estimating approach to estimate the $t_{-1}$ and $t_n$ values based on the input sample values. In other examples, the value of the out-of-range samples may be chosen to be the same. One of ordinary skill in the art may use other techniques to fill in the out-of-range values.

The size and stride length of the convolution filters may vary and may be chosen as any integer value greater than zero. For example, samples $t_0$, $t_2$, $t_4$ are provided as inputs to a convolution filter having a size of 3 and stride length of 2. One or more additional convolution filters may be used in other examples. In other examples, one convolution filter is used, whereas no convolution filter is included in other examples. Furthermore, a convolutional neural network layer may be used in place of, or in addition to, a convolution filter.

The output of each convolution filter (830(1) and 830(2)) (or the input sequence if convolution filters are omitted from the system) is input into a recurrent neural network layer 840(1). In the example shown in FIG. 8, the outputs of the first convolution filter $C_1$ and $C_2$ are input into a first recurrent neural network layer 840(1) (Ri and $R_3$). Each recurrent neural network layer may take the form of the recurrent neural network layer previously discussed, or any other any form known to a person skilled in the art. Optionally, the output of the first layer of recurrent neural networks ($R_1$ (840(1)) and $R_2$ (840(2))) may be input to a second layer of recurrent neural networks ($R_3$ (840(3) and $R_4$ (840(4)). Fig. 8 shows an example with two layers of recurrent neural networks, two convolution filters, the output of the final layer in the recurrent neural network being a combination of two sequences $R_2(t_n)$ (850(1)) and $R_4(t_n)$ (850(2)), where $N$ is the length of the input sequence and $n$ is each integer in the range $0 \leq n \leq N\text{-}1$.

The output of the recurrent neural networks may be used as input 860 to a fully connected layer. The fully connected layer may be used to classify the input sequence according to a criterion. In one example, the last sample from the last layers of the recurrent neural networks (e.g., $R_2(t_{N\text{-}1})$ and $R_4(t_{N\text{-}1})$) are input to the fully connected layer, and the previous samples ($R_2(t_0)$, $R_2(t_1)$, $R_2(t_2)$; $R_4(t_0)$, $R_4(t_1)$, $R_4(t_2)$) from each recurrent neural network layer may be ignored. Here input 860 to the fully connected layer includes the output from the last layer of the recurrent neural networks $R_2(t_3)$ and $R_4(t_3)$. In other examples comprising additional convolution filters, input 860 contains the last output generated by the recurrent neural network layer from the additional convolution filters (e.g., ($R_6$ (850(3)) and $R_8$ (850(4))).

The example shown in FIG. 8 has an input length of 4. The length of the input sequence is not limited to a length of 4, and may be any integer value greater than 0. Increasing (or decreasing) the length of the input sequence increases (or decreases) the number of convolutional and RNN operations to be carried out, and does not increase the number of weights (or parameters) of the system. The convolutional and RNN weights may be shared for all samples, and the convolution and RNN operations may be applied to each input sequence.

In other examples, one or more additional convolution filters may be included to the system. In some examples, each convolution filter may be tuned according to specific information within the source data. In some examples, each additional convolution filter may include an additional layer of recurrent neural networks. In other examples, the outputs of multiple convolution filters are statistically combined (e.g., arithmetic mean, geometric mean, etc.) to generate input to one or more recurrent neural networks. The last sample from each recurrent neural network layer is input to the fully connected layer in one example. In other examples, one or more samples from the output of one layer of the recurrent neural network may be statistically combined and used as input to the next layer in the system.

One or more fully connected layers 870 classify the input sequence according to chosen criterion. Fully connected layers 870 may include one or more layers 875 of hidden nodes. In the example shown in FIG. 8, final layer 880 of the fully connected layer classifies the input as either "clean" or "not clean," depending on the numeric value of the output. For example, an output (0.7, 0.3) is classified as "clean," whereas, output (0.3, 0.7) may be classified as "not clean." In one example, the sum of the output values in the example shown in FIG. 8 equals approximately 1. In other examples, the output may be classified in a multinomial fashion such as "malicious," "adware," and "good." Other classifications may be determined based on characteristics (either known or unknown) of the source data. Once trained, the system shown in FIG. 8 may classify an input data source accordingly to some criterion. In some examples the classification of final layer 880 is used. In other examples, after training the network with all layers, final layer 880 is removed and the adjacent penultimate layer 875 of hidden nodes is used as the output. Those systems then output a fixed representation with one value per node in the penultimate later, which can be leveraged as an embedding of the input sequence in subsequent classifiers. In some examples, this fixed representation has a lower dimensionality than the input sequence. In other examples, the final layer 880 and multiple adjacent layers 875(1)-875(H) of hidden nodes (multiple layers of hidden nodes are not depicted in FIG. 8) are removed after training the network, and the output from the remaining nodes are used as output of the network.

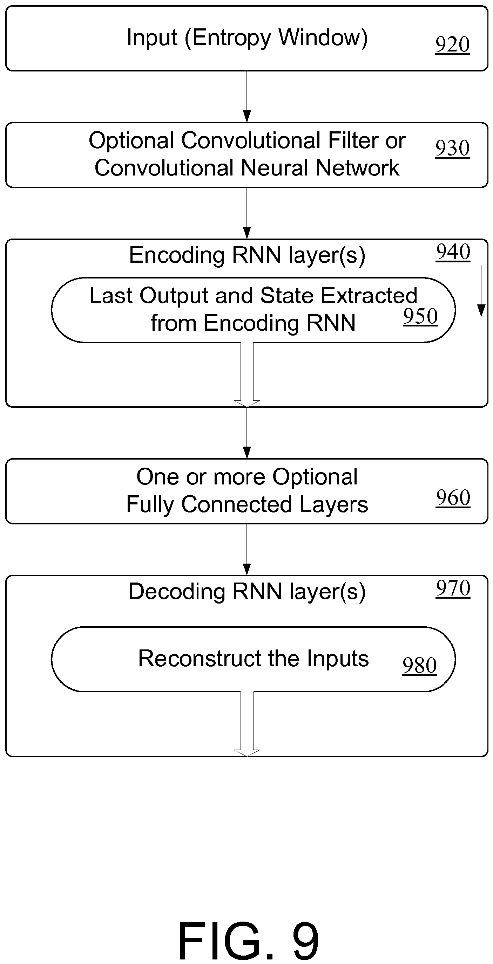

Another example of a system for classifying source data is shown in FIG. 9. Here the network layers are abstracted as blocks, rather than representing each input and computational step as lines and nodes, respectively, as shown in FIG. 8. Each block in FIG. 9 includes one or more computational steps. In this example, no class labels are provided as input during training. Instead, the network attempts to reconstruct the input using the fixed-length representation and adjust the system weights using an unsupervised learning method.

Input at block 920 of FIG. 9 represents input to the system. The input to the system is a representation of source data such as executable code. Other types of source data as discussed previously or as known in the art can also be used. Input at block 920 in FIG. 9 can take many forms as discussed previously, including Shannon Entropy tiles. Optionally, the source data may be pre-processed before it is input as an entropy tile at 920. The input to the system may also be source data itself with the optional inclusion of a computational block to extract features of the source data (e.g., Shannon Entropy).

In the example in FIG. 9, input at block 920 (e.g., Shannon Entropy tiles) is applied to optional convolutional filter 930. In some examples, optional convolutional filter 930 may be omitted. In other examples, one or more additional convolutional filters are included in the system, and the output of a convolution filter is input to another convolution layer. In other examples, the number of convolutional filters can be learned during training. In other examples, a convolutional filter may be replaced by a convolutional neural network.

The output of the convolutional filter 930 (or input at block 920 in the absence of a convolutional filter 930) is input into one or more encoding recurrent neural network layers 940. As discussed previously, encoding recurrent neural network layers 940 receive samples as input, generate output, and update their state values. In this example, the last output value and state generated from the last sample is extracted from encoding RNN layer 940 and used as the output of the encoding portion of the system at block 950. In other examples, a statistical analysis of one or more output values and/or state values generated by encoding RNN layer 940 is used as the output of the encoding portion of the system.

The output at block 950 of encoding RNN layer at block 940 is input into one or more optional fully connected layers at block 960. In another example, the state extracted from encoding RNN layer at block 950 is input into one or more optional fully connected layers at block 960. Fully connected layer at block 960 is optional and may be omitted in other examples. In other examples, a partially connected layer may be used in place of a fully connected layer. When trained, the output of the decoding RNN layers may approximate the input to the encoding RNN layers.

The network shown in FIG. 9 can be trained using an unsupervised training approach. During unsupervised training, the output of fully connected layer at block 960 is input into one or more decoding RNN layers at block 970. The output of decoding RNN layer at block 970 may in one example represent a reconstructed input as shown in block 980. The output or reconstructed input at block 980 may be compared to the input to the system. In some examples, the comparison of the output is to the input of encoding RNN layer at block 940. In other examples, the output of decoding RNN layer at block 970 is compared against the input of convolutional filter at block 930. In other examples, the input is compared against the initial input of the system. In one example, the initial input may be input that is applied to a feature extractor such as a Shannon Entropy window to generate the input at block 920. The weights of the network layers are adjusted based on the differences between the output of the fully connected layer and the input to the system. The comparison is then used in conjunction with a parameter adjusting algorithm such as a gradient descent algorithm to minimize the error in the reconstructed inputs calculated at block 980. The gradient descent algorithm adjusts the weights (parameters) of the convolutional filter (if present), the encoding RNN layers, the fully connected layer (if present), and the decoding RNN layers to minimize or reduce the error between input at block 920 and the output of decoding RNN layer at block 970 (e.g., the reconstructed inputs calculated at block 980). The samples are repetitively applied to the network, and the parameters are adjusted until the network achieves an acceptable level of input reconstruction. Once trained, fully connected layer at block 960, decoding RNN layers at block 970 and the input reconstruction layer at block 980 can be removed from the system. In some examples, fully connected layer at block 960 is not removed after training and instead its output is used as the output of the system after training. Additionally, in some examples some layers from fully connected layer at block 960 are removed and the remaining layers are used as output. For example, the final layer can be removed and the penultimate layer of fully connected layer at block 960 is used as output.

Additional fully connected layers may be included in the systems and methods. In an example, the systems and methods may include one optional fully connected layer. In other examples, the systems and methods may include one or more fully connected layers. After the network is adequately trained to reconstruct the inputs, the last output and state at block 950 extracted from the one or more encoding RNN layers 940 may represent the source data input, albeit at the same or a reduced dimensionality. Accordingly, decoding RNN layers at block 970 and input reconstruction layer at block 980 can be discarded. Additionally, in some examples, fully connected layer at block 960 can be fully or partially discarded, starting with the final layers. The output and state of the trained encoder RNN layers is a reduced dimensional representation of the input. In this fashion, the system shown in FIG. 9 produces a reduced dimensionality or embedding of the input to the system. In other examples, the dimensionality of the output is not reduced, and the representation of the encoder RNN has more desirable properties such as reduced noise, increased signal, and/or more sparsity. In some examples, the output of one of the one or more encoder RNNs represent an embedding of source data. In other examples, the output of the optional one or more fully connected layers may represent an embedding of the source data.

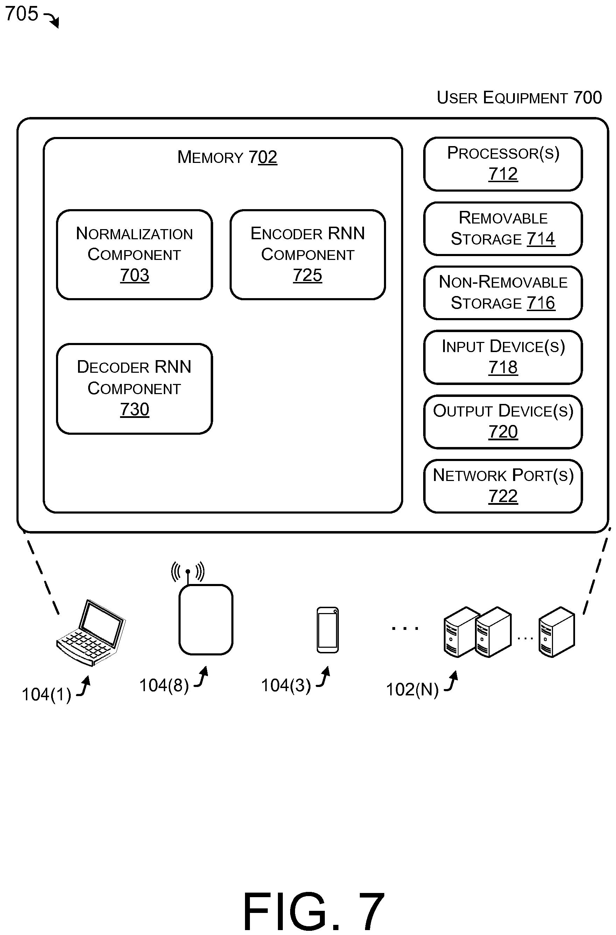

In another example shown in FIG. 7, a system for reducing the vector space of sequential data is disclosed. The user equipment shown in FIG. 7 includes a processor(s) 712, a removable storage 714, a non-removal storage 716, input device(s) 718, output device(s) 720, and network port(s) 722.

In some embodiments, the processor(s) 712 is a central processing unit (CPU), a graphics processing unit (GPU), or both CPU and GPU, or other processing unit or component known in the art.

The user equipment 700 also includes additional data storage devices (removable and/or non-removable) such as, for example, magnetic disks, optical disks, or tape. Such additional storage is illustrated in FIG. 7 by removable storage 714 and non-removable storage 716. Tangible computer-readable media can include volatile and nonvolatile, removable and non-removable media implemented in any method or technology for storage of information, such as computer readable instructions, data structures, program modules, or other data. Memory 702, removable storage 714 and non-removable storage 716 are examples of computer-readable storage media. Computer-readable storage media include, and are not limited to, RAM, ROM, EEPROM, flash memory or other memory technology, CD-ROM, digital versatile discs (DVD) or other optical storage, magnetic cassettes, magnetic tape, magnetic disk storage or other magnetic storage devices, or any other medium which can be used to store the desired information and which can be accessed by the user equipment 700. Any such tangible computer-readable media can be part of the user equipment 700.

The user equipment 700 can include input device(s) 718, such as a keypad, a cursor control, a touch-sensitive display, etc. Also, the user equipment 700 can include output device(s) 720, such as a display, speakers, etc. These devices are well known in the art and need not be discussed at length here.

As illustrated in FIG. 7, the user equipment 700 can include network port(s) 722 such as wired Ethernet adaptor and/or one or more wired or wireless transceiver. In some wireless embodiments, to increase throughput, the transceiver(s) in the network port(s) 722 can utilize multiple-input/multiple-output (MIMO) technology, 801.11ac, or other high bandwidth wireless protocols. The transceiver(s) in the network port(s) 722 can be any sort of wireless transceivers capable of engaging in wireless, radio frequency (RF) communication. The transceiver(s) in the network port(s) 722 can also include other wireless modems, such as a modem for engaging in Wi-Fi, WiMax, Bluetooth, or infrared communication.

The user equipment 700 also includes memory 702. In various embodiments, the memory 702 is volatile (such as RAM), non-volatile (such as ROM, flash memory, etc.) or some combination of the two. Memory 702 stores a normalization component 703 including a normalization operation 704 (discussed below), an encoder RNN component 725 and a decoder RNN component 730. As discussed below, in one example, the encoder RNN component 725 may include an encoder RNN (for example, encoding RNN layer 940), and decoder RNN component 730 may include a decoder RNN (for example, decoding RNN layer at block 970.

This system characterizes its input by identifying a reduced number of features of the input. The system uses encoder RNN 725 to reduce (compress) the dimensionality of the input source data so that a classifier can analyze this reduced vector space to determine the characteristics of the source data. An encoder RNN whose output includes less nodes than the sequential input data creates a compressed version of the input. After training, the output of the encoder RNN can be used as input to a machine learning system to characterize the source data. The output can be used by itself. Alternatively, the output can be combined with other features that are separately obtained. In one example, the source data is characterized as good or malicious. Example source data include sequential data such as command line data. Other example source data includes data from any scripting language, command line input to an operating system, any interpreted language such as JavaScript or Basic, bytecode, object code, or any other type of code such as executable code.

In one example, encoder RNN 725 converts the input (e.g., command line data) to create the final state (activations of the network after all input has been processed) of the encoder. The encoding function (such as a Hamming code representation or a random number population of initial values) may be determined before training, or alternatively, the training algorithm can optimize the encoding functions. To ensure that encoder RNN 725 represents the input meaningfully using a fixed number of values, the output of encoder RNN 725 is passed to decoder RNN 730. The output of the network from decoder RNN 730 can approximate the input to encoder RNN 725 when the system is properly trained, i.e. the output is the final state of activations of encoder RNN 725.

The input to encoder RNN 725 and the output from decoder RNN 730 can represent the same data. The output of encoder RNN 725 represents a compressed version of the input (or alternatively, a reduced set of features of the input) that is then passed to decoder RNN 730. In some examples, the output is not a compressed form but may be an alternative fixed-dimensional representation approximating the input data. The final state of the encoder functions in much the same way as the activation of the bottleneck layer in a traditional autoencoder, where a fully connected neural network with some number of encoding and decoding layers creates an activation between encoding and decoding that represents the input well enough to reconstruct it at the output.

Encoder RNN 725 functions as an autoencoder of the input, with the encoded input being at a lower, and equal, or higher dimensionality or feature length of the input. In some examples, the output is not lower dimensional but merely a fixed-dimensional representation of the input, or in other cases, a higher dimensionality representation of the input. For example, if the input to the encoder RNN is a single number, the final state of the encoder RNN may be of larger dimension than a single number. The output of encoder RNN 725 (or the state passed between encoder RNN 725 and decoder RNN 730) represent the vector space or feature space for embedding (or encoding) the command line data.

The output of encoder RNN 725 includes embedded features of the input data. In one example, the output of encoder RNN 725 is used as input to a supervised learning algorithm to classify the input data. One example supervised learning algorithm described with respect to the neural network system of the user equipment 200 of FIG. 2. In this case, the output of encoder RNN 725 is used as the input to the neural network system of user equipment 200 during the training and operational phases of the network system to classify the input data. In this case, the encoder RNN 725 is pre-trained on unlabeled source data, and thereafter, the output of the encoder RNN is fed into a fully connected network layer used for classification. Training the encoder RNN with labeled data can modify the encoder RNN to become more discriminative than if merely trained on unlabeled data. Furthermore, in other examples, the network can also include a feature extractor to compute the Shannon Entropy of the output of the encoder RNN, before that output is fed into a recurrent neural network layer or a fully connected layer.

In another example, the output of encoder RNN 725 is used as input to another supervised classifier such as a Neural Network, Support Vector Machine, Random Forest, decision tree ensemble, logistic regression, or another classifier. In some examples, the encoder RNN 725 output is the whole feature vector used as input. In other examples, the encoder RNN 725 output is combined with other features that are separately derived. In some examples, the output of encoder RNN 725 is used as input to an unsupervised machine learning technique such as k-means clustering, a self-organizing map, or a locality sensitive hash. In some examples, the output of encoder RNN 725 is the whole input to the unsupervised technique. In other examples, the output of RNN is combined with other features that are separately derived. In some other examples, the output of encoder RNN 725 is further processed before being used as input to a supervised or unsupervised machine learning technique, for example using principal component analysis, t-distributed stochastic neighbor embedding, random projections, or other techniques.

The encoder RNN 725 takes as input a sequence of numbers or sequence of vectors of numbers that arc generated from the input data either through a vector space embedding, either learned or not, a one-hot or other encoding, or the sequence of single numbers, scaled, normalized, otherwise transformed, or not. Encoder RNN 725 may include any number of layers of one or more types of RNN cells, each layer including an LSTM, GRU, or other RNN cell type. Additionally, each layer may have multiple RNN cells, the output of which is combined in some way before being sent to the next layer up if present. The learned weights within each cell may vary depending on the cell type. Encoder RNN 725 may produce an output after each element of the input sequence is provided to it in addition to the internal states of the RNN cells, all of which can be sent to the decoder RNN during training or used for embedding or classification.

In one example, encoder RNN 725 is a three-layer RNN including an input layer, a hidden layer, and an output layer. Encoder RNN 725 receives command line data as input. Encoder RNN 725 includes $W_e$, $U_e$, and $V_e$ weight matrices. The $W_e$ matrix is the set of weights applied to the input vector (the input to hidden weights), the $U_e$ matrix is the set of weights applied to the hidden layer in the next time interval of the RNN (the hidden to hidden weights), and the $V_e$ matrix is the set of weights applied to the output of the encoder RNN (the hidden to output weights).

To enhance the operation of encoder RNN 725, the command line data may be normalized by normalization component 703. For example, unique information related to the user and not to the input command line code, such as a username, a drive letter, and a unique identifier, can be removed or replaced with a known character. Alternatively, or additionally, some special characters may be selected as tokens (e.g., parentheses, brackets, colons, etc.) rather than being removed or normalized if these special characters provide command line information. In some examples, localization-specific components are normalized. For example, the English "Documents and Settings" path component is treated in the same way as its German counterpart "Dokumente und Einstellungen."

The command line embedding network also includes decoder RNN 730. Decoder RNN 730 may have a similar architecture to the encoder RNN, namely a three layer RNN. Decoder RNN 730 also includes a set of weights $W_d$ (weight matrix between input and hidden layer), $U_d$, (weight matrix between hidden layers) and $V_d$ (weight matrix between hidden and output layer).

Decoder RNN 730 takes as input the outputs of encoder RNN 725, which can be transformed by any sort of neural network or attention mechanism, along with a sequence of numbers or sequence of vectors of numbers that are generated from the input data either through a vector space embedding, either learned or not, a one-hot or other encoding, or the sequence of single numbers, scaled, normalized, otherwise transformed, or not. Decoder RNN 730 can consist of any number of layers of one or more types of RNN cells, each layer consisting of an LSTM, GRU, or other RNN cell type. Additionally, each layer can have multiple RNN cells, the output of which is combined in some way before being sent to the next layer up if there is one. The learned weights within each cell vary depending on the cell type. Decoder RNN 730 can produce an output after each decoding step in addition to the internal states of the RNN cells, all of which can be used in the next step of decoding or not based on the choice of training method. In addition, a search method such as beam search can be used to find an output sequence that has higher likelihood than a greedy step-wise decoding.

The command line embedding network may be trained in an unsupervised mode. In this example, because the output of the RNN decoder can match (or approximately match) the input to the RNN encoder, any difference between the input to the autoencoder and the output of the decoder are used to adjust the weights of the network. The network may be trained until the decoder reconstructs an acceptable approximation of the training data (the input to the RNN encoder). In another example, the system is trained in a semi-supervised fashion. For example, along with the command line, one or more additional input values are presented to encoder RNN 725 and attempted to be reconstructed by decoder RNN 730. In some examples, one of the input values indicates whether the command line is malicious. In some examples, one of the input values indicates whether the command line is part of a manually entered command, i.e. a command entered interactively as opposed to a command part of a script. In some examples, one of the input values indicates whether the command line completed successfully, for example by resulting in a return code of zero being passed back to the invoking shell.

The command line encoder may be trained by comparing the output of the decoder with the input to the encoder. A training algorithm (such as backpropagation through time) can be used to adjust the encoder weights ($W_e$, $U_e$, $V_e$) and decoder weights ($W_d$, $U_d$, $V_d$) to minimize the error between the output of the decoder RNN and the input to the encoder RNN. The command line embedding network may be trained in an unsupervised mode. The command line embedding network can be trained with a set of command line data until the decoder regenerates the command line data to an acceptable tolerance or level of optimization. In another example, the network can be trained in semi-supervised fashion by including additional input values to the input and output data.

After the command line embedding network is trained, the output of encoder RNN 725 is a representation of the command line input at a reduced dimensionality or features. The dimensionality is reduced from the length of the command line data input to the size of the output of encoder RNN 725. In other examples, the dimensionality of the output of encoder RNN 725 is equal to, or greater than, the dimensionality of the input. After training, the output of encoder RNN 725 can be inputted into a classifier to classify the input command line data. One such classifier is the neural network shown in FIG. 2. Other classifiers include other RNNs, multilayer perceptrons, other machine learning architectures, or combinations thereof.

The command line embedder system may be installed in various resources that are aware of command line data being part of executable data or applications. The command line embedder system may be installed in any computer-based system, whether in the cloud or locally operated. In one example, the computer system can monitor stack operation and analyze a call stack of a parent process attempting to execute command line codes in a child process to determine if the parent process has been compromised or exploited by malicious code. In other examples, a browser process can be monitored to determine if it is running malicious code. In some examples, the system is used to handle data other than command line data, for example file name data, URL data, domain name data, or file content data.

In other examples, the encoder and RNNs are not limited to three layer RNNs, but many take on any machine learning format. To reduce the dimensionality of the vector space (or features) of the input, the number of output nodes of the encoder RNN can be less than the vector space of the command line data.

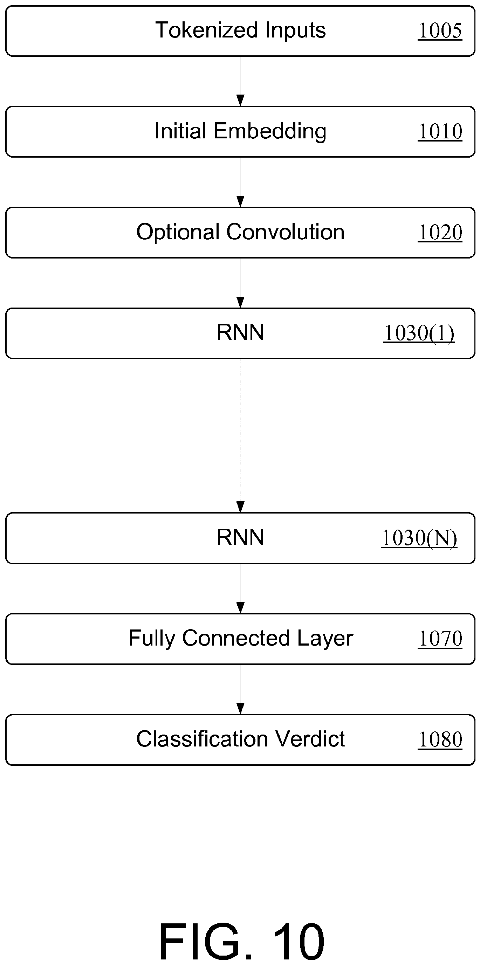

FIG. 10 depicts an example network that can be used for classifying unordered discrete inputs. Unordered discrete inputs include tokenized text strings. Example tokenized string text include command line text and natural language text. Input in other examples can include ordered discrete inputs or other types of input. In FIG. 10, the tokenized inputs 1005 may be represented to computational layers as real-valued vectors or initial "embeddings" representing the input. These initial embeddings can be created using word2vec, one-hot encoding, feature hashing, or latent semantic analysis, or other techniques.

The tokenized inputs 1005 are provided as inputs to initial embedder 1010 to generate an initial embedding shown in FIG. 10. It is understood that multiple embeddings may be possible. In another example, initial embedder 1010 may include one or more embedding layers. Embedder 1010 represents tokenized input 1005 in another dimensional space. One example initial embedding is a mapping of tokenized input 1005 to real numbers, creating real-valued vectors representing tokenized input 1005. Other techniques may be used to embed tokenized input 1005 such as complex number representation, polar representation, or other vector tcchniqucs.

The output of initial embedder 1010 is an embedded representation of tokenized inputs 1005. The output of initial embedder 1010 is used as input to an optional convolutional layer 1020. In other examples, one or more additional convolutional layers may be added. In other examples, the convolution layer may be omitted. The convolution layer functions according to the convolution layers previously discussed. In other examples, optional convolutional layer 1020 may be replaced with a convolutional neural network. Convolutional layer 1020 extracts information from the embedded tokenized inputs based on its convolution function to create a convolved representation of the embedded tokenized inputs 1005.

The output of optional convolutional layer 1020 is used as input to one or more recurrent neural network layers 1030(1)-1030(N), where N is the number of RNN layers. The number of RNN layers 1030 may encompass any number of layers, including no layers. The output of the final RNN layer 1030(N) is a fixed-length representation of tokenized inputs 1005. This fixed length representation of tokenized inputs 1005 is an example embedding of the source data. The RNN output representation of the input may be of lower, the same, or higher dimensionality as tokenized input 1005. This fixed length representation generated by the RNN layers may be used as input to fully connected layer 1070.

The output of fully connected layer 1070 may be analyzed at block 1080 to classify tokenized input 1005. For example, if the output for "clean" is 0.7 and the output for "not clean" is 0.3, the tokenized input can be classified as clean. The sum of the outputs from block 1080 related to "clean" and "not clean" in FIG. 10 can sum to 1 in one example, for example by using a softmax layer as the final layer.

Initial embedder1010 (including any layers of initial embedder 1010), optional convolutional layer 1020, recurrent neural network layers 1030, and fully connected layer 1070 may be trained using a supervised or unsupervised training approach to classify tokenized inputs 1005. A supervised learning approach can be used to train the example shown in FIG. 10. For this example, the system is provided with labeled samples, and the difference between the output of the fully connected layer 1070 and tokenized input 1005 is used to adjust the weights of the network layers. In one example, a gradient descent algorithm adjusts the weights and parameters of the system. Training samples are repetitively applied to the network, and the error algorithm adjusts the system weights and parameters until an acceptable error tolerance is reached. In other examples, an unsupervised learning method may be used to train the system. In one unsupervised learning example, fully connected layer 1070 is optional, and the classification verdict at block 1080 is replaced with a decoder RNN during training. During operation, the decoder is removed, and either the output of RNN layer 1030(N) or fully connected layer 1070 is used. The output can be used as input to another classification technique, supervised or unsupervised, which then uses the output as part of its input feature vector. In some examples, tokenized inputs are vectorized using feature hashing. For unsupervised training, the decoder RNN is trained such that the output matches approximate the output of any embedding layer in embedder 1010. In other examples, the embedding for tokens into a vector space is also learned. For unsupervised training, in some examples the decoder RNN is followed up by fully connected layers and a final softmax layer. Each output in the softmax layer corresponds to a token, and the output of the softmax layer is trained to approximate the tokenized inputs 1005 (e.g., output of tokenizer used to generate tokenized inputs 1005). In some examples, one or more embeddings may be calculated by one or more components of the disclosed systems and methods. In one example, initial embeddings may be computed by one or more layers of initial embedder 1010. These initial embeddings may be computed separately using techniques such as word2vec, one-hot encoding, feature hashing, or latent semantic analysis.

After supervised training, the output of the fully connected layer represents a classification verdict of the tokenized inputs. The classification verdict is a readout layer whose output in the example shown in FIG. 10 is "clean" or "not clean." In other examples, the output may be multinomial, such as "malicious," "adware," or "clean." The classification verdict and output at block 1080 may be discarded after training.

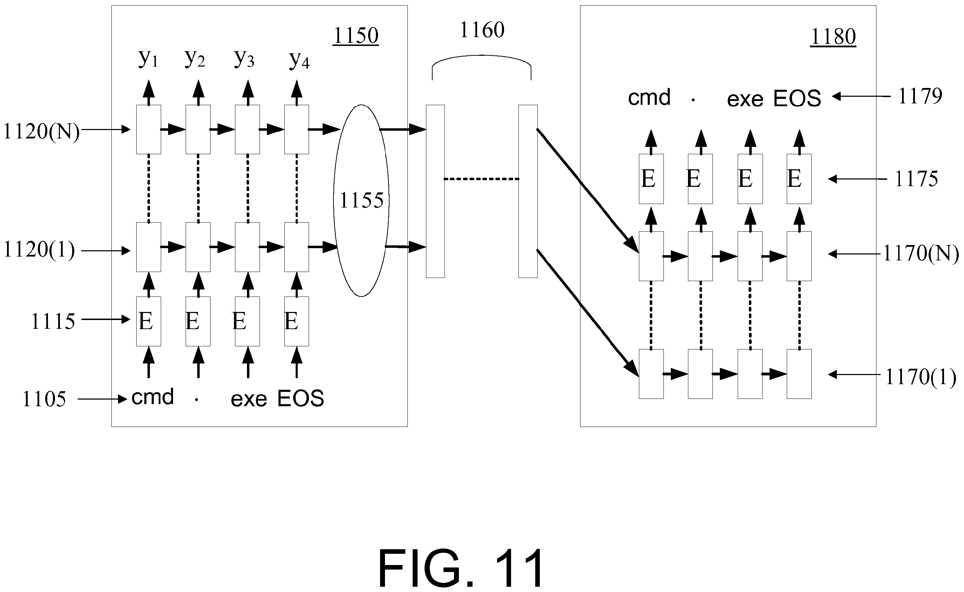

FIG. 11 depicts an example system for training command line embeddings. The system includes encoder 1150, an optional fully connected network 1160, and decoder 1180. This example is trained using unsupervised learning so no labels of the input data are provided to the network during training. The fitness of the model is evaluated by the network's ability to reconstruct the input sequence. Once the network is trained, the output of encoder 1150 can be used as embedding of the command line data. The output can be used as part of a feature vector of another classifier. In other examples, the output of a layer in the fully connected network 1060 is used as an embedding. In some examples, fully connected network is constructed to have a bottleneck layer, which is used as output for the embedding, to further reduce the dimensionality of the resulting embedding. In other examples, the fully connected network can optionally have other constraints placed upon it so that the dimensionality may or may not be reduced and other properties, such as sparsity, may or may not be improved. As shown in FIG. 11, the fully connected network 1160 may include one or more layers.

Although FIG. 11 illustrates fully connected network 1160 between encoder 1150 and decoder 1180, other example system architectures arc provided by the disclosed systems and methods. For example, the fully connected network 1160 may be included in the encoder 1150. In an example, the fully connected network 1160 may be included in the decoder 1180. In other examples, the fully connected layer may be included in one or more of the encoder 1150, the decoder 1180, or between encoder 1150 and decoder 1180. In another example, the fully connected layer may be omitted. In other examples, one or more layers of the fully connected network may be included in the encoder 1150 and one or more layers of the fully connected network may be included in encoder 1180. It is further noted that this discussion of the fully connected layer applies to the disclosed systems and methods of this disclosure.

Command line input 1105 in the example shown in FIG. 10 is "cmd.exe". Input command line 1105 is first tokenized into three tokens: "cmd"; "."; and "exe". Input tokens are input into encoder 1150. The tokens are "cmd"; "."; "exe"; and "EOS"; where EOS represents an end-of-sequence character. The tokens are sequentially embedded using an initial token embedding operation in embedding operation 1115 of encoder 1150. Each token 1105 is sequentially input into embedding operation 1115 to create an embedded version of input tokens (an initial embedding). The embedded version of the tokens is sequentially input into one or more encoding recurrent neural network layers 1120 to generate an example embedding of the source data. Recurrent neural network layers have been discussed previously and need not be repeated here. The system may include one more recurrent neural network layers (1120(1) - 1120(N)), where N is the number of recurrent neural network layers included in encoder 1150. For each sample, the recurrent neural network layers produce an updated output $y_N$ and state. The final state and output of the last RNN layer is used as input to the remaining network layers. In some examples, the embedding operation 1115 is omitted. This may occur, for example, when the input data is already in numerical format.

In one example, the vector space embedding of tokens in operation 1115 of encoder 1150 may be learned during training. Pre-trained vectors may be optionally used during the process of learning of this embedding operation. In other examples, embedding operation 1115 is determined *a priori* and whose parameters may be adjusted during training. For example, the embedding operation may be random codes, feature hashing, one-hot encoding, word2vec, or latent semantic analysis. These initial embedding operations produce outputs that can differ significantly from the final embedding produced by encoder 1150 at operation 1155, both in value and in dimensionality. The initial embedding operations for the inputs at operation 1115 for embedder of encoder 1150 and outputs at operation 1175 for the cmbcddcr of decoder 1180 need not be the same. It is understood that the disclosed systems and methods may generate one or more embeddings (including an initial embedding) of the source data.

The output of one or more layers of encoder RNN network 1120 is fed into an optional fully connected neural network 1160 placed between encoder 1150 and decoder 1180. When included, the activations of one of the fully connected layers may be used for the embedding of the command line input. Additional fully connected layers may be included in the systems and methods. In an example, the systems and methods may include one optional fully connected layer. In other examples, the systems and methods may include one or more fully connected layers. In other examples, the output of encoder 1150 may be used as the embedding of the command line input 1105. The output of the encoder (or fully connected layer), when trained can be a lower, equal, or higher dimensional representation of the input.

The output of fully connected network (or the final state of the encoder in the absence of a fully connected network) is used as input to decoder 1180 during the unsupervised training process. The output of fully connected network 1160 is a fixed length representation of the input of the encoder and is input to recurrent neural network layer 1170(1). The output of RNN layer 1170 is used as input to an embedding layer at operation 1175. The output 1179 of the decoder 1180 is compared to command line input 1105 of the encoder. 1150 The output of decoder can approximate command line input 1105, so any such difference is used to adjust the weights of the network to enable the decoder to adequately reconstruct the input. Various algorithms can be used, including a gradient descent algorithm, to adjust the weights. The example shown in FIG. 11 is trained using unsupervised learning so unlabeled samples are repetitively applied to the network until the calculated error meets or exceeds an acceptable threshold.

Once the network is trained, output from operation 1155 from encoder 1150 represents a fixed length representation or embedding of a sequence. After training, decoder 1180 may be removed. The output of a layer in fully connected network 1160 may also be an example embedding of the command line data for use in a subsequent classifier as part of its feature vector. In some examples, the final layer is used while in other examples an intermediate layer is used. Alternatively, the output of encoder 1150 at operation 1155 can be used as an example embedding of the command line data directly without inputting it into the fully connected network.

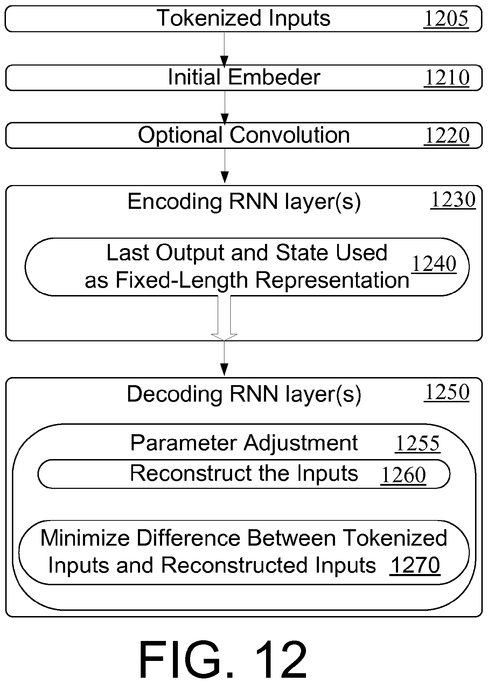

Another example of a system for analyzing discrete inputs is shown in FIG. 12. In this example, the inputs are tokenized, embedded, optionally convolved, and operated on by one or more encoding RNN layers. During training the output of the RNN layers is selected and used as input to a decoding RNN to reconstruct the tokenized inputs. The differences between the reconstructed inputs and the tokenized inputs is used to modify the system weights and parameters during an unsupervised learning process.

In FIG. 12, the discrete inputs are input into the system and tokenized to generate tokenized inputs at block 1205. The inputs can be tokenized using any known method, based upon the type of input. For example, the discrete inputs can be command line code or natural language code. The tokenized inputs are used as inputs to initial embedder 1210. As discussed previously, parameters of initial embedder 1210 can be either learned or fixed as random values and modified during learning.

The output of initial embedder 1210 is fed into optional convolution filter 1220. The optional convolution filter operates as discussed previously. The system shown in FIG. 12 may include additional convolution filters, or, alternatively, may contain no convolution filters. A convolutional neural network may be used in place of the optional convolution filter. The output of optional convolutional filter 1220 is input into one or more encoding RNN layers 1230. The operation of encoding RNN layers has been discussed previously and will not be repeated here. The last output and the last state of the last layer of encoding RNN layers 1230 is a fixed-length representation of tokenized input 1205. Each output of an RNN layer and the optional convolutional filter 1220 may be an example embedding of the source data. In other examples, the output of the optional convolution layer or one of the one or more encoding RNN layers also represent a fixed-length representation of tokenized input 1205.

During training, the fixed-length representation 1240 (e.g., last output and last state) is used as input to one or more decoding RNN layers 1250 to generate reconstructed inputs 1260. The output of reconstructed inputs 1260 may be compared to tokenized inputs 1205 to determine the accuracy of the input reconstruction. The system attempts to minimize (or reduce) the difference between tokenized inputs 1205 and reconstructed inputs 1260 at block 1270. In other examples, the system attempts to minimize (or reduce) the difference between outputs of one of the other layers in the network (e.g., convolution layer, encoding RNN layer) at block 1270. The network weights may be modified based on the difference (error) between tokenized inputs 1205 and reconstructed input 1260. One example algorithm for modifying the system weights and parameters at block 1255 is a gradient descent algorithm. For this unsupervised learning approach, unlabeled samples are repetitively applied to the network until the calculated difference between tokenized inputs 1205 and reconstructed inputs 1260 meets or falls within an acceptable tolerance.

Once trained, decoding RNN layers 1250 (and the reconstructed inputs 1260) can be removed from the system. In this example system, the last output and last state of the last encoding RNN layer is used as a fixed length representation of the tokenized input.

## CONCLUSION

Various example classification systems for executable code described herein permit more efficient analysis of various types of executable code and more efficient operation of computing devices. Various examples can reduce the time or memory requirements of software to determine malicious code and other variants, while maintaining or improving the accuracy of such determinations. Some examples herein permit classifying data streams produced by unknown generators, which may be, e.g., malware generated using a custom packer specific to that type of malware or the relevant adversary. Some examples permit classifying executable code even when few samples of a generator's output are available, e.g., a single sample or fewer than ten samples. Some examples identify malicious code by neural networks in determining classifications of unknown or data files of unknown provenance. Some examples are described with reference to malware, and the techniques described herein are not limited to files associated with malware. For example, techniques used herein can be used to classify media files (e.g., audio, video, or image); productivity files (e.g., text documents or spreadsheets); data files (e.g., database indexes or tables); or other types of files.

Various examples used herein can be used with a variety of types of data sources, including executable data that has been compiled or linked, assembled into distribution packages or script packages, combined into self-extractors or self-installers, packed, or encrypted, e.g., for content protection. Example executable code that can be analyzed by the disclosed neural networks disclosed herein include, and are not limited to PE, ELF, Mach-O, JAR, or DEX executables, or any other executable formats; PNG, GIF, or other image formats; OGG, MP3, MP4, Matroska or other audio or video container or bitstream formats; or traces of network traffic, e.g., headers or bodies of data packets in protocols such as IEEE 802.11, IP, UDP, or TCP. Example types training data include, and are not limited to, executable, static libraries, dynamic libraries, data files, compressed files, encrypted files, or obfuscated files.

Although the techniques have been described in language specific to structural features and/or methodological acts, it is to be understood that the appended claims are not necessarily limited to the features and/or acts described. Rather, the features and acts are described as example implementations of such techniques. For example, network 108, processing units 102 and 104, or other structures described herein for which multiple types of implementing devices or structures are listed can include any of the listed types, and/or multiples and/or combinations thereof.

The operations of the example processes are illustrated in individual operations and summarized with reference to those operations. The processes are illustrated as logical flows of operations, each operation of which can represent one or more operations that can be implemented in hardware, software, and/or a combination thereof. In the context of software, the operations represent computer-executable instructions stored on one or more computer-readable media that, when executed by one or more processors enable the processors to perform the recited operations. Generally, computer-executable instructions include routines, programs, objects, modules, components, data structures, and the like that perform functions and/or implement particular abstract data types. The order in which the operations are described is not intended to be construed as a limitation, and any number of described operations can be executed in any order, combined in any order, subdivided into multiple sub-operations, and/or executed in parallel to implement the described processes. The described processes can be performed by resources associated with one or more computing devices 102, 104, and/or 200 such as one or more internal and/or external CPUs and or GPUs, and/or one or more pieces of hardware logic such as FPGAs, DSPs, and/or other types described herein.

The methods and processes described herein can be embodied in, and fully automated via, software code modules executed by one or more computers and/or processors. The code modules can be embodied in any type of computer-readable medium. Some and/or all the methods can be embodied in specialized computer hardware. As used herein, the term "module" is intended to represent example divisions of the described operations (e.g., implemented in software or hardware) for purposes of discussion, and is not intended to represent any requirement or required method, manner, or organization. Accordingly, while various "modules" are discussed, their functionality and/or similar functionality may be arranged differently (e.g., combined into a fewer number of modules, broken into a larger number of modules, etc.). Further, while certain functions and modules are described herein as being implemented by software and/or firmware executable on a processor, in other embodiments, any or all the modules may be implemented in whole or in part by hardware (e.g., as an ASIC, a specialized processing unit, etc.) to execute the described functions. In some instances, the functionality and/or modules discussed herein may be implemented as part of the operating system. In other instances, the functionality and/or modules may be implemented as part of a device driver, firmware, etc.

The word "or" and the phrase "and/or" are used herein in an inclusive sense unless specifically stated otherwise. Accordingly, conjunctive language such as phrases "X, Y, or Z," "at least X, Y, or Z," or "at least one of Z, Y, or Z," unless specifically stated otherwise is to be understood as signifying that an item, term, etc. can be either X, Y, or Z, or a combination thereof. Condition language such as, among others, "can," "could," "might," and/or "may" unless specifically stated otherwise, are understood within the context to present that certain examples include, while other examples do not include, certain features, elements, and/or steps. Thus, such conditional language is not generally intended to imply that certain features, elements, and/or steps are in any way required for one or more examples and/or that one or more examples necessarily include logic for deciding, with and/or without user input and/or prompting, whether certain features, elements and/or steps are included and/or are to be performed in any particular example.

Any routine descriptions, elements and/or blocks in the flow diagrams described herein are/or depicted in the attached figures may be understood as potentially representing modules, segments, and/or portions of code that include one or more computer-executable instructions for implementing specific logical functions and/or elements in the routine. Alternative examples are included within the scope of the examples described herein in which elements and/or functions can be removed and/or executed out of order from any order shown or discussed, including substantially synchronously and/or in reverse order, depending on the functionality involved as would be understood by those skilled in the art. Examples herein are nonlimiting unless expressly stated otherwise, regardless of whether they are explicitly described as being nonlimiting. It should be emphasized that many variations and modifications can be made to the above-described examples. All such modifications and variations are intended to be included herein within the scope of this disclosure and protected by the following claims. Moreover, in the claims, any reference to a group of items provided by a preceding claim clause is a reference to at least some of the items in the group of items, unless specifically stated otherwise.

**Claims**

1. A method for generating a classification of variable length source data for detecting malware, the method comprising:

   receiving (610) source data having a first variable length;
   extracting (620) information related to features within the source data to generate a sequence of extracted information having a second variable length, the second variable length based on the first variable length;
   processing (640) the sequence of extracted information with an encoder neural network to generate an embedding of the source data, the encoder neural network including an input, an output, a recurrent neural network layer, and a first set of parameters, wherein the embedding of the source data represents a mapping of the source data to a feature space of a different dimensionality;
   wherein the encoder neural network is configured by training the encoder neural network with a decoder neural network, the decoder neural network including an input for receiving the embedding of the source data and a second set of parameters, the decoder neural network generating an output that approximates at least one of (a) the sequence of extracted information, (b) a category associated with the source data, or (c) the source data; and
   processing (660) at least the embedding of the source data with a classifier to generate a classification of the source data.

2. The method of claim 1, wherein extracting information from the source data includes generating one or more intermediate sequences.

3. The method of claim 2, wherein the sequence of extracted information is based, at least in part, on at least one of the one or more intermediate sequences.

4. The method of any preceding claim, wherein the encoder neural network further includes a fully connected layer, the fully connected layer having an input and an output.

5. The method of any preceding claim, wherein the decoder neural network is configured by (i) receiving an embedding of source data, (ii) adjusting, using machine learning, the first set of parameters and second set of parameters, and (iii) repeating (i) and (ii) until the output of the decoder neural network approximates to within an acceptable threshold of at least one of (a) the sequence of extracted information, (b) a category associated with the source data, (c) the source data, or (d) combinations thereof.

6. The method of any preceding claim, wherein the embedding of the source data represents a compression of the source data to a reduced dimension feature space or a transformation of the source data to a fixed-dimension feature space.

7. The method of any preceding claim, wherein the classifier is a gradient-boosted tree, ensemble of gradient-boosted trees, random forest, support vector machine, fully connected multilayer perceptron, a partially connected multilayer perceptron, or general linear model.

8. A system (205) for generating a classification of source data by a processor for detecting malware, the source data having a first variable length, the system comprising:

   one or more processors (212);
   a memory (202) having instructions stored therein, which, when executed by the one or more processors, cause the one or more processors to perform actions comprising:

   extracting information related to features within source data to generate a sequence of extracted information having a second variable length, the second variable length based on the first variable length;
   processing the sequence of extracted information with an encoder neural network to generate an embedding of the source data, the encoder neural network including an input, an output, a recurrent neural network layer, and a first set of parameters, wherein the embedding of the source data represents a mapping of the source data to a feature space of a different dimensionality;
   wherein the encoder neural network is configured by training the encoder neural network with a decoder neural network, the decoder neural network including an input for receiving the embedding of the source data and a second set of parameters, the decoder neural network generating an output that approximates at least one of (a) the sequence of extracted information, (b) a category associated with the source data, or (c) the source data; and

processing at least the embedding of the source data with a classifier to generate a classification of the source data.

9. The system of claim 8, wherein the embedding of the source data is combined with additional data processing before processing at least the embedding of the source data with the classifier to generate the classification.

10. The system of claim 8 or 9, wherein extracting information from the source data includes generating one or more intermediate sequences and optionally the sequence of extracted information is based, at least in part, on at least one of the one or more intermediate sequences.

11. The system of any one of claims 8 to 10, wherein extracting information from the source data comprises executing at least one of a convolution operation, a Shannon Entropy operation, a statistical operation, a wavelet transformation operation, a Fourier transformation operation, a compression operation, a disassembling operation, or a tokenization operation.

12. The system of any one of claims 8 to 11, wherein the encoder neural network includes at least one of a plurality of recurrent neural network layers or a plurality of fully connected layers.

13. The system of any one of claims 8 to 12, wherein the decoder neural network includes at least one of one or more recurrent neural network layers or one or more fully connected layers.

14. The system of claim 8, wherein the encoder neural network further includes a fully connected layer (210), the fully connected layer having an input and an output.

15. The system of claim 14, wherein the embedding of the source data is based, at least in part, on the output of the fully connected layer.

16. The system of claim 14 or 15, wherein the output of the fully connected layer is provided as input to the decoder neural network.

17. The system of any one of claims 14 to 16, wherein the output of the recurrent neural network layer is provided as input to the fully connected layer, and the output of the fully connected layer is the embedding of the source data.

18. The system of any one of claims 14 to 17, wherein the decoder neural network includes a recurrent neural network layer.

19. The system of any one of claims 8 or 14 to 18, wherein extracting information further comprises performing a window operation on the source data, the window operation having a size and a stride.

**Patentansprüche**

1. Ein Verfahren zum Erzeugen einer Klassifizierung von Quelldaten variabler Länge zum Erkennen von Malware, wobei das Verfahren Folgendes beinhaltet:

Empfangen (610) von Quelldaten mit einer ersten variablen Länge;

Extrahieren (620) von Informationen, die sich auf Merkmale innerhalb der Quelldaten beziehen, um eine Sequenz extrahierter Informationen mit einer zweiten variablen Länge zu erzeugen, wobei die zweite variable Länge auf der ersten variablen Länge basiert;

Verarbeiten (640) der Sequenz extrahierter Informationen mit einem neuronalen Codierernetzwerk, um eine Einbettung der Quelldaten zu erzeugen, wobei das neuronale Codierernetzwerk einen Eingang, einen Ausgang, eine rekurrente neuronale Netzwerkschicht und einen ersten Satz Parameter umfasst, wobei die Einbettung der Quelldaten eine Abbildung der Quelldaten auf einen Merkmalsraum einer anderen Dimensionalität darstellt;

wobei das neuronale Codierernetzwerk durch das Trainieren des neuronalen Codierernetzwerks mit einem neuronalen Decodierernetzwerk konfiguriert wird, wobei das neuronale Decodierernetzwerk einen Eingang für das Empfangen der Einbettung der Quelldaten und einen zweiten Satz Parameter umfasst, wobei das neuronale Decodierernetzwerk einen Ausgang erzeugt, der sich mindestens einem von Folgendem annähert: (a) der Sequenz extrahierter Informationen, (b) einer mit den Quelldaten assoziierten Kategorie oder (c) den Quelldaten; und

Verarbeiten (660) mindestens der Einbettung der Quelldaten mit einem Klassifikator, um eine Klassifizierung der Quelldaten zu erzeugen.

2. Verfahren gemäß Anspruch 1, wobei das Extrahieren von Informationen aus den Quelldaten das Erzeugen einer oder mehrere Zwischensequenzen umfasst.

3. Verfahren gemäß Anspruch 2, wobei die Sequenz extrahierter Informationen mindestens teilweise auf mindestens einer der einen oder mehreren Zwischensequenzen basiert.

4. Verfahren gemäß einem der vorhergehenden Ansprüche, wobei das neuronale Codierernetzwerk ferner eine vollständig verbundene Schicht umfasst, wobei die vollständig verbundene Schicht einen Eingang und einen Ausgang aufweist.

5. Verfahren gemäß einem der vorhergehenden Ansprüche, wobei das neuronale Decodierernetzwerk durch Folgendes konfiguriert wird: (i) Empfangen einer Einbettung von Quelldaten, (ii) Anpassen, unter Verwendung von Maschinenlernen, des ersten Satzes Parameter und zweiten Satzes Parameter und (iii) Wiederholen von (i) und (ii), bis sich der Ausgang des neuronalen Decodierernetzwerks mindestens einem von Folgendem innerhalb eines akzeptablen Schwellenwerts annähert: (a) der Sequenz extrahierter Informationen, (b) einer mit den Quelldaten assoziierten Kategorie, (c) den Quelldaten oder (d) Kombinationen davon.

6. Verfahren gemäß einem der vorhergehenden Ansprüche, wobei die Einbettung der Quelldaten eine Komprimierung der Quelldaten in einen Merkmalsraum reduzierter Dimension oder eine Transformation der Quelldaten in einen Merkmalsraum fester Dimension darstellt.

7. Verfahren gemäß einem der vorhergehenden Ansprüche, wobei der Klassifikator ein gradientenverstärkter Baum (gradient-boosted tree), ein Ensemble von gradientenverstärkten Bäumen, ein Zufallswald, eine Support Vector Machine, ein vollständig verbundenes mehrschichtiges Perzeptron, ein teilweise verbundenes mehrschichtiges Perzeptron oder ein allgemeines lineares Modell ist.

8. Ein System (205) zum Erzeugen einer Klassifizierung von Quelldaten durch einen Prozessor zum Erkennen von Malware, wobei die Quelldaten eine erste variable Länge aufweisen, wobei das System Folgendes beinhaltet:

einen oder mehrere Prozessoren (212);
einen Speicher (202) mit darin gespeicherten Anweisungen, die, wenn durch den einen oder die mehreren Prozessoren ausgeführt, bewirken, dass der eine oder die mehreren Prozessoren Aktionen durchführen, die Folgendes beinhalten:

Extrahieren von Informationen, die sich auf Merkmale innerhalb von Quelldaten beziehen, um eine Sequenz extrahierter Informationen mit einer zweiten variablen Länge zu erzeugen, wobei die zweite variable Länge auf der ersten variablen Länge basiert;
Verarbeiten der Sequenz extrahierter Informationen mit einem neuronalen Codierernetzwerk, um eine Einbettung der Quelldaten zu erzeugen, wobei das neuronale Codierernetzwerk einen Eingang, einen Ausgang, eine rekurrente neuronale Netzwerkschicht und einen ersten Satz Parameter umfasst, wobei die Einbettung der Quelldaten eine Abbildung der Quelldaten auf einen Merkmalsraum einer anderen Dimensionalität darstellt;
wobei das neuronale Codierernetzwerk durch das Trainieren des neuronalen Codierernetzwerks mit einem neuronalen Decodierernetzwerk konfiguriert ist, wobei das neuronale Decodierernetzwerk einen Eingang für das Empfangen der Einbettung der Quelldaten und einen zweiten Satz Parameter umfasst, wobei das neuronale Decodierernetzwerk einen Ausgang erzeugt, der sich mindestens einem von Folgendem annähert: (a) der Sequenz extrahierter Informationen, (b) einer mit den Quelldaten assoziierten Kategorie oder (c) den Quelldaten; und
Verarbeiten mindestens der Einbettung der Quelldaten mit einem Klassifikator, um eine Klassifizierung der Quelldaten zu erzeugen.

9. System gemäß Anspruch 8, wobei die Einbettung der Quelldaten mit zusätzlicher Datenverarbeitung kombiniert wird, bevor mindestens die Einbettung der Quelldaten mit dem Klassifikator verarbeitet wird, um die Klassifizierung zu erzeugen.

10. System gemäß Anspruch 8 oder 9, wobei das Extrahieren von Informationen aus den Quelldaten das Erzeugen einer oder mehrerer Zwischensequenzen umfasst und optional die Sequenz extrahierter Informationen mindestens teilweise auf mindestens einer der einen oder mehreren Zwischensequenzen basiert.

11. System gemäß einem der Ansprüche 8 bis 10, wobei das Extrahieren von Informationen aus den Quelldaten das Ausführen mindestens einer von einer Faltungsoperation, einer Shannon-Entropie-Operation, einer statistischen Operation, einer Wavelet-Transformations-Operation, einer Fourier-Transformations-Operation, einer Komprimierungsoperation, einer Zerlegungsoperation oder einer Tokenisierungsoperation beinhaltet.

12. System gemäß einem der Ansprüche 8 bis 11, wobei das neuronale Codierernetzwerk mindestens eine von einer Vielzahl von rekurrenten neuronalen Netzwerkschichten oder einer Vielzahl von vollständig verbundenen Schichten umfasst.

**13.** System gemäß einem der Ansprüche 8 bis 12, wobei das neuronale Decodierernetzwerk mindestens eines von einer oder mehreren rekurrenten neuronalen Netzwerkschichten oder einer oder mehreren vollständig verbundenen Schichten umfasst.

**14.** System gemäß Anspruch 8, wobei das neuronale Codierernetzwerk ferner eine vollständig verbundene Schicht (210) umfasst, wobei die vollständig verbundene Schicht einen Eingang und einen Ausgang aufweist.

**15.** System gemäß Anspruch 14, wobei die Einbettung der Quelldaten mindestens teilweise auf dem Ausgang der vollständig verbundenen Schicht basiert.

**16.** System gemäß Anspruch 14 oder 15, wobei der Ausgang der vollständig verbundenen Schicht dem neuronalen Decodierernetzwerk als Eingang bereitgestellt wird.

**17.** System gemäß einem der Ansprüche 14 bis 16, wobei der Ausgang der rekurrenten neuronalen Netzwerkschicht der vollständig verbundenen Schicht als Eingang bereitgestellt wird und der Ausgang der vollständig verbundenen Schicht die Einbettung der Quelldaten ist.

**18.** System gemäß einem der Ansprüche 14 bis 17, wobei das neuronale Decodierernetzwerk eine rekurrente neuronale Netzwerkschicht umfasst.

**19.** System gemäß einem der Ansprüche 8 oder 14 bis 18, wobei das Extrahieren von Informationen ferner das Durchführen einer Fensteroperation an den Quelldaten beinhaltet, wobei die Fensteroperation eine Größe und eine Schrittgröße (stride) aufweist.

**Revendications**

**1.** Un procédé pour générer un classement de données source à longueur variable pour détecter des logiciels malveillants, le procédé comprenant le fait :

de recevoir (610) des données source ayant une première longueur variable ;
d'extraire (620) des informations relatives à des caractéristiques au sein des données source afin de générer une séquence d'informations extraites ayant une deuxième longueur variable, la deuxième longueur variable étant basée sur la première longueur variable ;

de traiter (640) la séquence d'informations extraites avec un réseau neuronal codeur afin de générer une intégration des données source, le réseau neuronal codeur incluant une entrée, une sortie, une couche de réseau neuronal récurrent, et un premier jeu de paramètres, l'intégration des données source représentant un mappage des données source en un espace de caractéristiques d'une dimensionnalité différente ;
dans lequel le réseau neuronal codeur est configuré par le fait d'entraîner le réseau neuronal codeur avec un réseau neuronal décodeur, le réseau neuronal décodeur incluant une entrée pour recevoir l'intégration des données source et un deuxième jeu de paramètres, le réseau neuronal décodeur générant une sortie qui approxime au moins un élément parmi (a) la séquence d'informations extraites, (b) une catégorie associée aux données source, ou (c) les données source ; et
de traiter (660) au moins l'intégration des données source avec un classificateur afin de générer un classement des données source.

**2.** Le procédé de la revendication 1, dans lequel le fait d'extraire des informations des données source inclut le fait de générer une ou plusieurs séquences intermédiaires.

**3.** Le procédé de la revendication 2, dans lequel la séquence d'informations extraites est basée, au moins en partie, sur au moins une des une ou plusieurs séquences intermédiaires.

**4.** Le procédé de n'importe quelle revendication précédente, dans lequel le réseau neuronal codeur inclut en outre une couche entièrement connectée, la couche entièrement connectée ayant une entrée et une sortie.

**5.** Le procédé de n'importe quelle revendication précédente, dans lequel le réseau neuronal décodeur est configuré par le fait (i) de recevoir une intégration de données source, (ii) de régler, à l'aide d'un apprentissage machine, le premier jeu de paramètres et le deuxième jeu de paramètres, et (iii) de répéter (i) et (ii) jusqu'à ce que la sortie du réseau neuronal décodeur approxime jusqu'à dans les limites d'un seuil acceptable d'au moins un élément parmi (a) la séquence d'informations extraites, (b) une catégorie associée aux données source, (c) les données source, ou (d) une combinaison de celles-ci.

**6.** Le procédé de n'importe quelle revendication précédente, dans lequel l'intégration des données source représente une compression des données source jusqu'à un espace de caractéristiques à dimension réduite ou une transformation des données source en un espace de caractéristiques à dimension fixe.

7. Le procédé de n'importe quelle revendication précédente, dans lequel le classificateur est un arbre amplifié par gradient (*gradient-boosted*), un ensemble d'arbres amplifiés par gradient, une forêt aléatoire, une machine à vecteurs de support, un perceptron multicouche entièrement connecté, un perceptron multicouche partiellement connecté, ou un modèle linéaire général.

8. Un système (205) pour générer un classement de données source par un processeur pour détecter des logiciels malveillants, les données source ayant une première longueur variable, le système comprenant :

un ou plusieurs processeurs (212) ;
une mémoire (202) ayant des instructions stockées dans celle-ci, lesquelles, lorsqu'elles sont exécutées par les un ou plusieurs processeurs, amènent les un ou plusieurs processeurs à réaliser des actions comprenant le fait :

d'extraire des informations relatives à des caractéristiques au sein de données source afin de générer une séquence d'informations extraites ayant une deuxième longueur variable, la deuxième longueur variable étant basée sur la première longueur variable ;
de traiter la séquence d'informations extraites avec un réseau neuronal codeur afin de générer une intégration des données source, le réseau neuronal codeur incluant une entrée, une sortie, une couche de réseau neuronal récurrent, et un premier jeu de paramètres, l'intégration des données source représentant un mappage des données source en un espace de caractéristiques d'une dimensionnalité différente ;
dans lequel le réseau neuronal codeur est configuré par le fait d'entraîner le réseau neuronal codeur avec un réseau neuronal décodeur, le réseau neuronal décodeur incluant une entrée pour recevoir l'intégration des données source et un deuxième jeu de paramètres, le réseau neuronal décodeur générant une sortie qui approxime au moins un élément parmi (a) la séquence d'informations extraites, (b) une catégorie associée aux données source, ou (c) les données source ; et
de traiter au moins l'intégration des données source avec un classificateur afin de générer un classement des données source.

9. Le système de la revendication 8, dans lequel l'intégration des données source est combinée avec un traitement de données supplémentaire avant de traiter au moins l'intégration des données source avec le classificateur afin de générer le classement.

10. Le système de la revendication 8 ou de la revendication 9, dans lequel le fait d'extraire des informations des données source inclut le fait de générer une ou plusieurs séquences intermédiaires et facultativement la séquence d'informations extraites est basée, au moins en partie, sur au moins une des une ou plusieurs séquences intermédiaires.

11. Le système de n'importe laquelle des revendications 8 à 10, dans lequel le fait d'extraire des informations des données source comprend le fait d'exécuter au moins un élément parmi une opération de convolution, une opération d'entropie de Shannon, une opération statistique, une opération de transformée en ondelettes, une opération de transformée de Fourier, une opération de compression, une opération de désassemblage, ou une opération de segmentation en unités.

12. Le système de n'importe laquelle des revendications 8 à 11, dans lequel le réseau neuronal codeur inclut au moins un élément parmi une pluralité de couches de réseau neuronal récurrent ou une pluralité de couches entièrement connectées.

13. Le système de n'importe laquelle des revendications 8 à 12, dans lequel le réseau neuronal décodeur inclut au moins un élément parmi une ou plusieurs couches de réseau neuronal récurrent ou une ou plusieurs couches entièrement connectées.

14. Le système de la revendication 8, dans lequel le réseau neuronal inclut en outre une couche entièrement connectée (210), la couche entièrement connectée ayant une entrée et une sortie.

15. Le système de la revendication 14, dans lequel l'intégration des données source est basée, au moins en partie, sur la sortie de la couche entièrement connectée.

16. Le système de la revendication 14 ou de la revendication 15, dans lequel la sortie de la couche entièrement connectée est fournie comme entrée au réseau neuronal décodeur.

17. Le système de n'importe laquelle des revendications 14 à 16, dans lequel la sortie de la couche de réseau neuronal récurrent est fournie comme entrée à la couche entièrement connectée, et la sortie de la couche entièrement connectée est l'intégration des données source.

**18.** Le système de n'importe laquelle des revendications 14 à 17, dans lequel le réseau neuronal décodeur inclut une couche de réseau neuronal récurrent.

**19.** Le système de n'importe laquelle des revendications 8 ou 14 à 18, dans lequel le fait d'extraire des informations comprend en outre le fait de réaliser une opération de fenêtrage sur les données source, l'opération de fenêtrage ayant une taille et un pas (*stride*).

100

110

104(1)

104(2)

104(3)

104(4)

104(5)

104(6)

104(7)

104(8)

104(K)

102(1)

102(2)

102(N)

106

Network(s)
108

FIG. 1

205

USER EQUIPMENT 200

MEMORY 202

FEATURE
EXTRACTOR
COMPONENT
204

CONVOLUTIONAL
FILTER
COMPONENT
206

RECURRENT
NEURAL NETWORK
COMPONENT
208

FULLY CONNECTED
LAYER
COMPONENT
210

PROCESSOR(S)
212

REMOVABLE
STORAGE 214

NON-REMOVABLE
STORAGE 216

INPUT DEVICE(S)
218

OUTPUT DEVICE(S)
220

NETWORK PORT(S)
222

104(1)   104(8)   104(3)   · · ·   102(N)

# FIG. 2

FIG. 3A

310

312

314

316

318

EP 3 534 284 B1

310

322

324

326

328

# FIG. 3B

FIG. 4A

FIG. 4B

FIG. 5

Identify Source Data <u>610</u>

Optional Pre-processing Source Data <u>615</u>

Extract Information
(Create Sequence of <u>620</u>
Shannon Entropy Tiles)

Convolve the Sequence of
Shannon Entropy Tiles <u>630</u>

Process with RNN <u>640</u>

Optionally Process with Second RNN <u>650</u>

Process with Fully Connected Layer to
Classify Executable Source Code <u>660</u>

# FIG. 6

705

USER EQUIPMENT 700

MEMORY 702

NORMALIZATION COMPONENT 703

ENCODER RNN COMPONENT 725

DECODER RNN COMPONENT 730

PROCESSOR(S) 712

REMOVABLE STORAGE 714

NON-REMOVABLE STORAGE 716

INPUT DEVICE(S) 718

OUTPUT DEVICE(S) 720

NETWORK PORT(S) 722

104(1)

104(8)

104(3)

···

102(N)

# FIG. 7

FIG. 8

Input (Entropy Window)    920

Optional Convolutional Filter or    930
Convolutional Neural Network

Encoding RNN layer(s)    940

Last Output and State Extracted
from Encoding RNN    950

One or more Optional
Fully Connected Layers    960

Decoding RNN layer(s)    970

Reconstruct the Inputs    980

# FIG. 9

Tokenized Inputs     1005

Initial Embedding     1010

Optional Convolution     1020

RNN     1030(1)

RNN     1030(N)

Fully Connected Layer     1070

Classification Verdict     1080

# FIG. 10

FIG. 11

Tokenized Inputs     <u>1205</u>

Tokenized Inputs     <u>1205</u>

Initial Embeder     <u>1210</u>

Optional Convolution     <u>1220</u>

Encoding RNN layer(s)     <u>1230</u>

Last Output and State Used as Fixed-Length Representation <u>1240</u>

Decoding RNN layer(s)     <u>1250</u>

Parameter Adjustment     <u>1255</u>

Reconstruct the Inputs     <u>1260</u>

Minimize Difference Between Tokenized Inputs and Reconstructed Inputs   <u>1270</u>

# FIG. 12

EP 3 534 284 B1

**EP 3 534 284 B1**

**REFERENCES CITED IN THE DESCRIPTION**

**Patent documents cited in the description**

- US 2016379112 A
- WO 2016168690 A
- EP 3173983 A